# EUROPÄISCHE PATENTSCHRIFT

(11) **EP 1 526 906 B1**
(45) Veröffentlichungstag und Bekanntmachung des Hinweises auf die Patenterteilung: **07.02.2007**
(21) Anmeldenummer: 03747902.9
(22) Anmeldetag: 14.08.2003
(51) Int. Cl.: B01D 11/02

(54) **VORRICHTUNG UND VERFAHREN ZUR KONTINUIERLICHEN EXTRAKTION VON EXTRAKTSTOFFEN AUS FESTEN STOFFEN, ZUM WASCHEN VON FESTEN STOFFEN UND ZUR UMKRISTALLISATION**
DEVICE AND METHOD FOR CONTINUOUSLY EXTRACTING EXTRACT MATERIALS FROM SOLID MATERIALS, FOR WASHING SOLID MATERIALS AND RECRYSTALLIZING
DISPOSITIF ET PROCEDE POUR EXTRAIRE DE MANIERE CONTINUE DES MATIERES D'EXTRACTION DE MATIERES SOLIDES, POUR LAVER LES MATIERES SOLIDES ET POUR LES RECRISTALLISER

(30) Priorität: 14.08.2002 DE 10237281
(43) Veröffentlichungstag der Anmeldung: 04.05.2005
(73) Patentinhaber: BIRKEN GMBH, 75223 Niefern-Öschelbronn (DE)
(72) Erfinder: SCHEFFLER, Armin, 75223 Niefern-Öschelbronn (DE); GUENTHER, Christoph, 73087 Boll (DE)
(74) Vertreter: Bickel, Michael
(86) Internationale Anmeldenummer: PCT/EP2003/009058
(87) Internationale Veröffentlichungsnummer: WO 2004/016336

(56) Entgegenhaltungen:
- EP-A- 0 499 267
- WO-A-95/00602
- WO-A-96/27418
- US-A- 4 746 421

## Beschreibung

Die vorliegende Erfindung betrifft eine Vorrichtung zur kontinuierlichen Extraktion von Extraktstoffen aus festen Stoffen wie beispielsweise Pflanzenmaterial, insbesondere eine Vorrichtung zur kontinuierlichen Extraktion von Triterpenen aus Pflanzen und Pflanzenteilen. Die Erfindung betrifft außerdem ein Verfahren zur kontinuierlichen Extraktion von festen Stoffen, insbesondere von Pflanzenmaterial

Es ist seit langem bekannt, natürliche Inhalts-, Wirk- und Aromastoffe aus vollständigen Pflanzen oder deren Bestandteilen zu isolieren. Als einer der ersten Naturstoffe wurde Betulin, der Stoff, welcher der Birkenrinde ihre weiße Farbe verleiht, im Jahre 1788 aus Pflanzenmaterial gewonnen (Lowitz, M., Chemische Analysen, Hrsg. Crell, L., Vol. 2, S. 312). Der weiße Teil der Birkenrinde, insbesondere der Spezies Betula pendula, Betula verrucosa und Betula papyfera kann mehr als 30 % Betulin enthalten. Genauere Untersuchungen liegen von Rainer Ekman aus dem Jahre 1983 vor, wonach aus der trockenen äußeren Rinde von Betula verrucosa 21 - 40 % Triterpene bzw. 16,7 - 34 % Betulin extrahiert wurden (Ekman, R. (1983a), Holzforschung, 37, S. 205 - 211).

Betulin ist ein pentazyklisches Triterpen mit einem Lupan-Gerüst, das auch als Betulinol, Trochoton, Birkenkampher und (Coryli-)resinol bezeichnet wird. Das charakteristische Merkmal der Lupan-Gruppe ist ein Ring mit fünf Kohlenstoffatomen innerhalb des pentazyklischen Systems, der eine α-Isopentenylgruppe an der Position C-19 besitzt. Betulin zeichnet sich weiterhin durch eine hohe thermische Stabilität aus, sein Schmelzpunkt liegt zwischen 250 und 261°C, wobei noch höhere Werte nach der Sublimation des rekristallisierten Produktes erhalten werden. Sein Molekulargewicht beträgt 442,7, es ist löslich in Pyridin und Tetrahydrofuran, aber nur gering löslich in Dichlormethan, Chloroform und kalten organischen Lösungsmitteln, wobei sich die Löslichkeit mit steigender Temperatur erheblich erhöht. In Wasser und kaltem Petrolether [Kohlenwasserstoffe mit 5 bis 8 C-Atomen (C₅-C₈ KW)] ist Betulin praktisch unlöslich. Kinetische Untersuchungen haben außerdem eine sehr geringe Reaktivität der Hydroxygruppen von Betulin gezeigt (Übersichtsartikel: Jääskeläinen, P. (1981), Paperi ja Puu - Papper och Trä 10, S. 599-603).

Ein grundsätzliches Verfahren zur Extraktion von Triterpenen aus Pflanzenteilen ist beispielsweise in der WO 01/72315 A1 beschrieben.

Die üblicherweise verwendeten Vorrichtungen zur Extraktion von Extrakten sind Gefäße, die chargenweise mit dem zu extrahierenden Material gefüllt werden, um darin im Durchfluss oder auch im geschlossenen System, teils ruhend oder auch gerührt, das Material zu extrahieren, wobei die Behälter anschließend wieder entleert werden, wie dies z.B. bei Perkolatoren der Fall ist.

Für die Extraktion schwerer löslicher Extraktstoffe, wie beispielsweise von Triterpenen aus Rinden, insbesondere von Betulin aus Birkenkork, bei denen zur Extraktion höhere Temperaturen, insbesondere Temperaturen oberhalb der Siedetemperatur des Lösungsmittels, angewendet werden müssen, sind Extraktionsverfahren mittels dieser Vorrichtungen zeitaufwendig und damit auch kostenintensiv.

Als kontinuierlich arbeitende Vorrichtungen sind Wirbelbettextraktoren bekannt, in die feste Stoffe und Extraktionsmittel gemeinsam gepumpt werden, bei denen die Extraktstoffe im Wirbelbett extrahiert und über eine Filtrationsvorrichtung separiert werden. Diese Vorrichtungen arbeiten aber nur unterhalb des Siedepunktes des Extraktionsmittels, weil eine kontinuierliche Trennung von Extraktionslösung und extrahiertem Material unter Druck und Temperatur bisher nicht verwirklicht ist.

Bei den genannten Vorrichtungen schließen sich an die Extraktion von zu gewinnenden Extraktstoffen, insbesondere wenn es sich um Betulin aus Birkenkork handelt, zu deren Reinigung aufwendige Umkristallisationsverfahren an, die sehr viel Lösungsmittel benötigen und die hohe Substanzverluste mit sich bringen.

Diese Nachteile bekannter Vorrichtungen haben trotz der in großen Mengen bei der Holzgewinnung als Abfallprodukt anfallenden Birkenrinde bis heute zu keiner nennenswerten technischen Aufarbeitung, Nutzung oder Verwertung der im Birkenkork enthaltenen Triterpene, insbesondere des in großen Mengen enthaltenen Betulins geführt.

Die EP-A-0 499 267 beschreibt eine Vorrichtung zur technischen Fraktionierung von Polymeren. Diese Vorrichtung umfasst eine Extraktionskolonne mit einem länglichen Gehäuse, das einen näher an einem oberen Ende angeordneten ersten Einlass für ein Feed/Extrationsagens, einen näher an dem unteren Ende angeordneten zweiten Einlass für eine Extraktionsagens/Feed, sowie am oberen und unteren Ende angeordnete Abläufe aufweist.

Ziel der vorliegenden Erfindung ist es, eine Vorrichtung und ein Verfahren zur kontinuierlichen Extraktion von Extrakten aus festen Stoffen, insbesondere von Triterpenen aus Birkenbestandteilen, zur Verfügung zu stellen, die ein beschleunigtes und effektives Extraktionsverfahren realisiert.

Dieses Ziel wird durch eine Vorrichtung und ein Verfahren gemäss den Merkmalen der Ansprüche 1 und 19 gelöst. Das erfindungsgemäße kontinuierliche Extraktionsverfahren eignet sich grundsätzlich auch zum kontinuierlichen Waschen von Feststoffteilen, wie beispielsweise Pflanzenbestandteilen. Ein solches Waschverfahren ist Gegenstand des Anspruchs 13. Ebenso eignet sich das erfindungsgemäße Verfahren zum kontinuierlichen Umkristallisieren. Ein solches Umkristallisationsverfahren ist Gegenstand des Anspruchs 16.

Vorteilhafte Ausgestaltungen der Erfindung sind Gegenstand der Unteransprüche.

Die erfindungsgemäße Vorrichtung zur kontinuierlichen Extraktion von Extrakten aus festen Stoffen, insbesondere von Pflanzenextrakten aus Pflanzen oder Pflanzenbestandteilen, umfasst eine Extraktionseinheit mit einer ersten Filter- und Sedimentationsanordnung. Die Filter- und Sedimentationsanordnung umfasst einen ersten Einlass zum Zuführen eines Feststoff-Extraktionsmittel-Gemisches, eine Sedimentationseinheit, einen ersten Auslass für einen Extrakt, einen zweiten Auslass im Bereich der Sedimentationseinheit sowie wenigstens einen beabstandet zu dem ersten Einlass im Bereich der Sedimentationseinheit angeordneten zweiten Einlass zum Zuführen eines Extraktionsmittels.

Eine derartige Filter- und Sedimentationsanordnung ermöglicht eine Extraktion von Feststoffen im Gegenstrom, wobei ein dem zweiten Einlass, der als Extraktionsmitteleinlass dient, zugeführtes Extraktionsmittel wenigstens teilweise entgegen der Strömungsrichtung des über den ersten Einlass zugeführten Feststoff- und Extraktionsmittelgemisches strömt. Die in dem Extraktionsmittel gelösten Extrakte werden durch diesen Gegenstrom über den ersten Auslass ausgeleitet, so dass sie zur weiteren Verarbeitung zur Verfügung stehen. Die in dem Feststoff-Extraktionsmittel-Gemisch enthaltenen Feststoffteile sinken gegen den Gegenstrom des Extraktionsmittels, das über den Extraktionsmitteleinlass zugeführt wird, ab und werden mit einem Teil des Extraktionsmittels über den zweiten Auslass abgeführt. In der Filter- und Sedimentationsanordnung findet auf diese Weise eine kontinuierliche Extraktion der Feststoffteile und gleichzeitig eine Trennung der Feststoffteile und des in dem Extraktionsmittel gelösten Extrakts statt, wobei die Filter- und Sedimentationsanordnung dazu ausgebildet ist, den für die Extraktion von Extrakten erforderlichen Temperaturen und Drücken standzuhalten.

Vorzugsweise umfasst die Filter- und Sedimentationsanordnung, in der bereits durch den erzeugten Gegenstrom eine Trennung des Extraktionsmittels mit den darin gelösten Extrakten und den extrahierten Feststoffteilen stattfindet, eine Filtereinheit mit einem Filter, wobei das Filter zwischen der Sedimentationseinheit und dem ersten Auslass angeordnet ist. Diese Filtereinheit dient dazu, feste Bestandteile aus dem in Richtung des ersten Auslasses strömenden Extraktstrom auszufiltern.

Vorzugsweise umfasst die Extraktionseinheit neben der Filter- und Sedimentationsanordnung ein Extraktionsrohr mit einem Einlass, zur Zuführung eines Feststoff-Extraktionsmittel- Gemisches und mit einem Auslass, der an den ersten Einlass der Filter- und Sedimentationseinheit angeschlossen ist. Das Extraktionsrohr ist vorzugsweise waagrecht angeordnet und beheizt, um das zugeführte Feststoff-Extraktionsmittel-Gemisch auf eine für die Extraktion erforderliche Temperatur aufzuheizen, wobei das Extraktionsrohr entsprechend druckfest und so dimensioniert ist, dass eine für das Aufheizen ausreichende Wärmeübertragung gewährleistet ist. Innerhalb des Extraktionsrohres wird das Feststoff-Extraktionsmittel-Gemisch durch eine Verwirbelungsvorrichtung, vorzugsweise durch eine Spirale, verwirbelt, wobei die Spirale besonders bevorzugt von der Pumpe am Einlass des Extraktionsrohres angetrieben wird.

Die erfindungsgemäße Vorrichtung umfasst neben der Extraktionseinheit bei einem Ausführungsbeispiel auch eine Wascheinheit zum Waschen der festen Stoffe, deren Extraktstoffe in der Extraktionseinheit extrahiert werden. Die Wascheinheit ist vorzugsweise entsprechend der Extraktionseinheit aufgebaut und weist eine zweite Filter- und Sedimentationsanordnung auf. Diese zweite Filter- und Sedimentationsanordnung umfasst einen ersten Einlass, eine Sedimentationseinheit, einen als Waschmittelauslass dienenden ersten Auslass, einen zweiten Auslass im Bereich der Sedimentationseinheit sowie wenigstens einen beabstandet zu dem ersten Einlass angeordneten als Waschmitteleinlass dienenden zweiten Einlass.

Dem Einlass der Filter- und Sedimentationsanordnung der Wascheinheit wird im Betrieb ein Feststoff-Lösungsmittel-Gemisch zugeführt, wobei die Feststoffteile in diesem Gemisch mittels der Filter- und Sedimentationsanordnung im Gegenstrom gewaschen werden. Zu diesem Zweck wird ein Waschmittel, beispielsweise ein Lösungsmittel, über den zweiten Einlass zugeführt, wobei dieses Waschmittel wenigstens teilweise entgegen der Strömungsrichtung des Feststoff-Lösungsmittel-Gemisches in der Sedimentationsanordnung strömt. Lösliche Verunreinigungen werden über diesen Gegenstrom der Filtereinheit zugeführt und über den ersten Auslass, vor dem vorzugsweise ein Filter angeordnet ist, abgeführt. Die im Gegenstrom gereinigten Feststoffteile werden mit einem Teil des über den Waschmitteleinlass zugeführten frischen Wasch- bzw. Lösungsmittels dem Auslass der Filter- und Sedimentationsanordnung zugeführt.

Diese am Auslass der Filter- und Sedimentationsanordnung der Wascheinheit zur Verfügung stehenden gereinigten Feststoffteile werden beispielsweise mittels einer eine Pumpe umfassenden Fördereinrichtung der Extraktionseinheit zugeführt.

Als Waschmittel in der Wascheinheit und als Extraktionsmittel in der Extraktionseinheit wird vorzugsweise dasselbe Mittel verwendet, so dass die in der Wascheinheit gewaschenen und mit einem Teil des Waschmittels aus der Wascheinheit abgeführten Feststoffteile unmittelbar der Extraktionseinheit zugeführt werden können.

Vorzugsweise umfasst die Wascheinheit entsprechend der Extraktionseinheit ein beheiztes Waschrohr mit einem Einlass zum Zuführen eines Feststoff-Waschmittel-Gemisches und einem Auslass, wobei der Auslass an den ersten Einlass der Filter- und Sedimentationsanordnung der Wascheinheit angeschlossen ist. Um eine Sedimentation innerhalb des Waschrohres zu vermeiden, ist dieses innen vorzugsweise mit einer drehbaren Spirale ausgestattet, wobei die Spirale besonders bevorzugt von einer Pumpe am Einlass des Extraktionsrohres angetrieben wird.

Wie erläutert, ist die Wascheinheit entsprechend der Extraktionseinheit mit einer Filter- und Sedimentationsanordnung und einem gegebenenfalls vorgeschalteten Druckrohr aufgebaut. Ob diese Wascheinheit tatsächlich nur zum Waschen der Feststoffteile dient, oder ob in dieser Einheit bereits eine Teilextraktion der Feststoffteile stattfindet, ist abhängig von der Temperatur und dem Druck in der Filter- und Sedimentationseinheit und dem vorgeschalteten Druckrohr.

Die Temperaturen und Drücke, bei denen der Waschvorgang in der Filter- und Sedimentationsanordnung der Wascheinheit und gegebenenfalls in dem Waschrohr erfolgt, können geringer als die Drücke in der Filter- und Sedimentationsanordnung der Extraktionseinheit und gegebenenfalls dem Extraktionsrohr sein, um eine Extraktion von Feststoffteilen bereits während des Waschvorgangs zu vermeiden. Übliche Temperaturen für den Waschvorgang liegen zwischen 20 °C und 85 °C, bei einem Druck zwischen Umgebungsdruck und etwa 2 bar.

Es besteht jedoch auch die Möglichkeit, die Temperaturen und Drücke während des "Waschvorgangs" so zu wählen, dass bereits während dieses Vorgangs eine teilweise Extraktion der Feststoffteile stattfindet, wodurch ein zweistufiges Extraktionsverfahren realisiert ist. Die vor der oben erläuterten Extraktionseinheit angeordnete Einheit wird im Folgenden stets als Wascheinheit bezeichnet, wobei in dieser Einheit selbstverständlich in der erläuterten Weise bereits eine Teilextraktion oder auch eine Umkristallisation erfolgen kann.

Selbstverständlich ist die Vorrichtung durch eine Kaskadierung weiterer Filter- und Sedimentationseinheiten erweiterbar, um ein Extraktionsverfahren mit mehr als zwei Stufen zu realisieren.

Zur Bereitstellung des Feststoff-Lösungsmittel-Gemisches, welches zum Waschen der Feststoffteile der Wascheinheit zugeführt wird, steht vorzugsweise ein Behälter zur Verfügung, dem die Feststoffe und ein Waschmittel/Extraktionsmittel zudosiert werden, wobei zwischen den Behälter und der Wascheinheit eine Fördereinrichtung vorhanden ist. Dieser Behälter hat vorzugsweise unten einen Auslass, der unmittelbar in den Einlass der Fördereinrichtung, die wenigstens eine Pumpe umfasst, übergeht.. Diese Pumpe dient zur Förderung des Feststoff-Lösungsmittel-Gemisches in die Wascheinheit und zur Erzeugung eines für den Waschvorgang/Extraktionsvorgang erforderlichen Druckes in der Wascheinheit und gegebenenfalls zum Antrieb der im Waschrohr angeordneten Verwirbelungsvorrichtung.

Bei einer anderen Ausführungsform ist der Behälter zur Bereitstellung des Feststoff-Lösungsmittel-Gemisches von der Fördereinrichtung in die Wascheinheit räumlich getrennt, sodass zwischen beiden eine weitere Fördervorrichtung angeordnet ist.

Der Filter- und Sedimentationsanordnung der Extraktionseinheit ist über den zweiten Einlass ein Extraktionsmittel zugeführt, das zur Erzeugung des Gegenstromes in der Sedimentationsanordnung und zum Ausleiten der Feststoffteile über den zweiten Auslass dient. Vorzugsweise sind zwei solche Einlässe zum Zuführen des Extraktionsmittels, nämlich ein erster und ein zweiter Extraktionsmitteleinlass, vorhanden, die beabstandet an der langgestreckten Sedimentationseinheit angeordnet sind, wobei dem näher an dem Einlass der Filter- und Sedimentationsanordnung angeordneten Extraktionsmitteleinlass vorzugsweise ein vorgewärmtes Extraktionsmittel zugeführt ist. Dieses vorgewärmte Extraktionsmittel dient in der Filter- und Sedimentationsanordnung bei dieser Ausführungsform im Wesentlichen zur Erzeugung des Gegenstromes, während das über den weiteren Extraktionsmitteleinlass zugeführte Extraktionsmittel im Wesentlichen zum Ausleiten der nach der Extraktion verbleibenden Feststoffteile über den Auslass der Filter- und Sedimentationsanordnung dient. Es sei darauf hingewiesen, dass auch ein einziger solcher Einlass zur Erfüllung der genannten Zwecke ausreichend ist.

Der Vorteil des Vorsehens zweier Extraktionsmitteleinlässe besteht darin, dass beide Flüsse so geregelt werden können, dass nur heiße frische Lösung im Gegenstrom gegen die sedimentierenden Feststoffteile steigt, sich mit der heißen Extraktlösung aus dem Extraktionsrohr vereint und dabei ein Abkühlen der heißen Extraktlösung vermieden wird. Eine Abkühlung könnte im Grenzbereich zwischen der heißen Extraktlösung und dem kalten Extraktionsmittel zur Abscheidung von Extrakt, damit zur Wärmeisolation an der Behälterwand und dann zu einer verstärkten Abscheidung und schließlich zum Zusetzen des Behälters führen.

Vorzugsweise ist die Filter- und Sedimentationseinheit oberhalb des wenigstens einen Extraktionsmitteleinlasses wärmeisoliert und temperierbar.

Dem als Extraktauslass dienenden ersten Auslass der Extraktionsvorrichtung ist bei einer Ausführungsform der erfindungsgemäßen Vorrichtung eine Kühlkristallisationsvorrichtung und eine Trennvorrichtung zur Trennung von Extrakt und Extraktionsmittel nachgeschaltet.

Sofern Temperatur und Druck in der Wascheinheit so gewählt sind, dass bereits eine Teilextraktion in dieser Wascheinheit stattfindet, ist auch dem ersten Auslass der Wascheinheit eine solche Kühlkristallisationsvorrichtung und Trennvorrichtung nachgeschaltet. In diesem Fall besteht die Möglichkeit, dass die Auslässe der der Extraktionseinheit nachgeordneten Kühlkristallisationsvorrichtung und der der Wascheinheit nachgeordneten Kühlkristallisationsvorrichtung in eine gemeinsame Trennvorrichtung münden.

Dies Kühlkristallisationsvorrichtung umfasst bei einer Ausführungsform eine Versprüheinrichtung, die über eine Düse in einen gekühlten Behälter mündet. Der in dem Extraktionsmittel gelöste Extrakt kristallisiert beim Versprühen der Lösung über die Düse in den gekühlten Behälter, und liegt dann suspendiert vor. Bei einer weiteren bevorzugten Ausführungsform kann dieser Behälter unter Vakuum gesetzt werden, um die Verdampfungswärme des Lösungsmittels zum Kühlen zu nutzen.

Die erfindungsgemäße Vorrichtung ist vorzugsweise so ausgestaltet, dass ein gemeinsamer Kreislauf für das während des Waschvorgangs benötigte Waschmittel und das während des Extraktionsvorgangs benötigte Extraktionsmittel vorhanden ist, sodass dasselbe Lösungsmittel für den Waschvorgang und den Extraktionsvorgang verwendet werden kann. Bei der Verwendung der erfindungsgemäßen Vorrichtung zum Waschen, Extrahieren oder Umkristallisieren eines geeigneten Feststoffes richtet sich das Wasch-, Lösungs- oder Umkristallisiermittel nach der Natur des Feststoffes.

Geeignete Lösungsmittel bei der Gewinnung von Triterpenen aus Birkenbestandteilen sind organische Lösungsmittel, vorzugsweise alle Kohlenwasserstoffe mit einem Siedebereich von 0°C bis 150°C, besonders bevorzugt n-Pentan, n-Hexan oder n-Heptan.

Kernstück der erfindungsgemäßen Vorrichtung ist eine Filter- und Sedimentationsanordnung, die in gleicher Bauweise sowohl in der Extraktionseinheit, in der Wascheinheit als auch in der Umkristallisiereinheit verwendet werden kann. Diese Filter- und Sedimentationsanordnung umfasst vorzugsweise einen langgestreckten Behälter, mit einem ersten und zweiten Einlass, einem ersten und zweiten Auslass und einer Sedimentationszone, wobei der erste Einlass beabstandet zu einem oberen Ende und einem unteren Ende im Bereich der Sedimentationszone in das Behälterinnere mündet. Der zweite Einlass, der je nach Einsatz der Filter- und Sedimentationsanordnung in der Wascheinheit, der Extraktionseinheit oder der Umkristallisiereinheit als Extraktionsmitteleinlass, als Waschmitteleinlass oder als Umkristallisiermitteleinlass dient, ist beabstandet zu dem unteren Ende und unterhalb des ersten Einlasses angeordnet.

Des weiteren umfasst die Filter- und Sedimentationsanordnung vorzugsweise eine Filtereinheit mit einem Filter, der dazu dient, bei Einsatz in der Waschvorrichtung lösliche Verunreinigungen mit dem Lösungsmittelstrom von den sedimentierenden Feststoffteilen abzutrennen und bei Einsatz in der Extraktionseinheit oder Umkristallisiereinheit heiß gelösten Extraktstoff mit dem Extraktmittelstrom von den extrahierten Feststoffteilen abzutrennen. Der Filter ist optional vorhanden und besitzt eine Art Sicherheitsfunktion, um zu vermeiden, dass eventuell Feststoffteile in den abgeführten Lösungsmittel- bzw. Extraktstrom gelangen.

Eine solche Filter- und Sedimentationsanordnung mit einem langgestreckten Behälter, der einen ersten Einlass beabstandet zu einem oberen Ende und einem unteren Ende im Bereich einer Sedimentationszone, sowie wenigstens einen weiteren, beabstandet zu dem unteren Ende angeordneten zweiten Einlass, einen oberhalb der Sedimentationszone angeordneten ersten Auslass und einen im Bereich der Sedimentationsanordnung angeordneten zweiten Auslass aufweist, ist neben dem Waschen von Feststoffteilen wir bereits erwähnt und dem Extrahieren von Extraktstoffen aus Feststoffteilen auch für eine Umkristallisation des Extraktes geeignet. Hierzu wird in dem vor der Filter- und Sedimentationsanordnung angeordneten Extraktionsrohr eine heiße Lösung des umzukristallisierenden Stoffes hergestellt und der Filter- und Sedimentationsanordnung über deren Einlass zugeführt. Bedingt durch den in der Sedimentationszone erzeugten Gegenstrom wird der heiß gelöste Stoff über den ersten Auslass wieder ausgeleitet, während unlösliche Verunreinigungen sedimentieren und über den zweiten Auslass abgeführt werden.

Die Filter- und Sedimentationsanordnung umfasst vorzugsweise einen Staubfilter mit wenigstens zwei in der Sedimentationszone in Längsrichtung des Behälters beabstandet zueinander angeordneten elektrisch leitenden Gittern, an die wechselweise ein Bezugspotential, ein positives Potential und ein negatives Potential anlegbar ist. Dieses Filter beruht auf der Tatsache, dass in einem elektrisch nicht leitenden Lösungsmittel kleinste Feststoffteile die nicht gegen die Schwerkraft in der Sedimentationszone absinken, elektrostatisch positiv oder negativ geladen sind und deshalb durch die Gitter eingefangen werden können. Wird eine Kaskade von Gitterpaaren in der Sedimentationszone vorgesehen, wobei an benachbarte Gitter stets unterschiedliche Potentiale oder Bezugspotential, insbesondere Masse, gelegt wird, so können die feinen Feststoffpartikel durch abwechselndes Verpolen der Potentiale an den Gittern in Richtung des zweiten Auslasses geführt werden.

Das erfindungsgemäße Verfahren zur kontinuierlichen Extraktion von Extrakten aus festen Stoffen umfasst das Bereitstellen einer zuvor erläuterten Filter- und Sedimentationsanordnung mit einem ersten und zweiten Einlass, einem ersten und zweiten Auslass und einer Sedimentationszone, das Zuführen eines Feststoff-Extraktionsmittel-Gemisches an den ersten Einlass und das Zuführen eines Extraktionsmittels an den wenigstens einen zweiten Einlass, wobei die Fließgeschwindigkeiten des Feststoff-Extraktionsmittel-Gemisches an dem ersten Einlass und des Extraktionsmittels an dem zweiten Einlass so aufeinander abgestimmt sind, dass über das Feststoff-Extraktionsmittel-Gemisch zugeführte Feststoffteile gegen die Schwerkraft in der Sedimentationszone absinken und über den zweiten Auslass abgeführt werden, wobei die den Extrakt enthaltende Lösung über den ersten Auslass abgeführt wird. Die Abstimmung der Fließgeschwindigkeit des Feststoff-Extraktionsmittel-Gemisches und des Extraktionsmittels erfolgt beispielsweise über die Fließgeschwindigkeit am zweiten Auslass.

Vorzugsweise sind die Fließgeschwindigkeiten des Feststoff-Extraktionsmittel-Gemisches an dem ersten Eingang und des Extraktionsmittels an dem zweiten Eingang mittels der Fließgeschwindigkeit über den zweiten Auslass so aufeinander abgestimmt, dass der Extraktionsmittelstrom in der Sedimentationszone, gegen den die Feststoffteile absinken weniger als 0,05 cm/sec, vorzugsweise weniger als 0,01 cm/sec beträgt.

Bei einer Ausführungsform des Verfahrens ist vorgesehen, dass das Feststoff-Extraktionsmittel-Gemisch vor der Zuführung zu der Filter- und Sedimentationsanordnung ein Extraktionsrohr durchläuft, in dem unter erhöhtem Druck und erhöhter Temperatur Extrakte aus den Feststoffteilen extrahiert und in dem Extraktionsmittel gelöst werden.

Das erläuterte eignet sich auch zum kontinuierlichen Waschen von Feststoffteilen, wobei anstelle des Extraktionsmittels ein Waschmittel zugeführt wird und Temperaturen und Drücke geeignet eingestellt werden.

Weiterhin eignet sich das Verfahren auch zum kontinuierlichen Umkristallisieren, wobei anstelle des Wasch- oder Extraktionsmittels ein geeignetes Lösungsmittel zum Umkristallisieren zugeführt wird und Temperaturen und Drücke geeignet eingestellt werden. Für dieses Verfahren ist die Vorrichtung besonders vorteilhaft, weil in der Regel das Lösevermögen eines Lösemittels mit der Temperatur steigt und der umzukristallisierende Stoff in der erfindungsgemäßen Vorrichtung weit über dem bei Normaldruck vorliegenden Siedepunkt des Lösungsmittels gelöst werden kann.

Die erfindungsgemäße Vorrichtung wird nachfolgend anhand eines Ausführungsbeispiels mittels der beigefügten Figuren näher erläutert. In den Figuren zeigt
- Figur 1: ein erstes Ausführungsbeispiel einer erfindungsgemäßen Vorrichtung zur kontinuierlichen Extraktion von Extraktstoffen, die eine Extraktionseinheit und eine vor der Extraktionseinheit angeordnete Wascheinheit aufweist,
- Figur 2: ein zweites Ausführungsbeispiel einer erfindungsgemäßen Vorrichtung, die eine Einheit entweder zur kontinuierlichen Extraktion von Extraktstoffen aus festen Stoffen, zum Waschen von Feststoffteilen oder zum Umkristallisieren von Extraktstoffen aufweist,
- Figur 3: eine detaillierte Darstellung einer Filter- und Sedimentationsanordnung gemäß einer ersten Ausführungsform (Figur 3a) und einer zweiten Ausführungsform (Figur 3b) in Seitenansicht im Querschnitt und in Draufsicht im Querschnitt (Figur 3c),
- Figur 4: eine detaillierte Darstellung einer Filter- und Sedimentationsanordnung gemäß einer ersten Ausführungsform, die optional einen Staubfilter enthält und eine detaillierte Darstellung des Staubfilters,

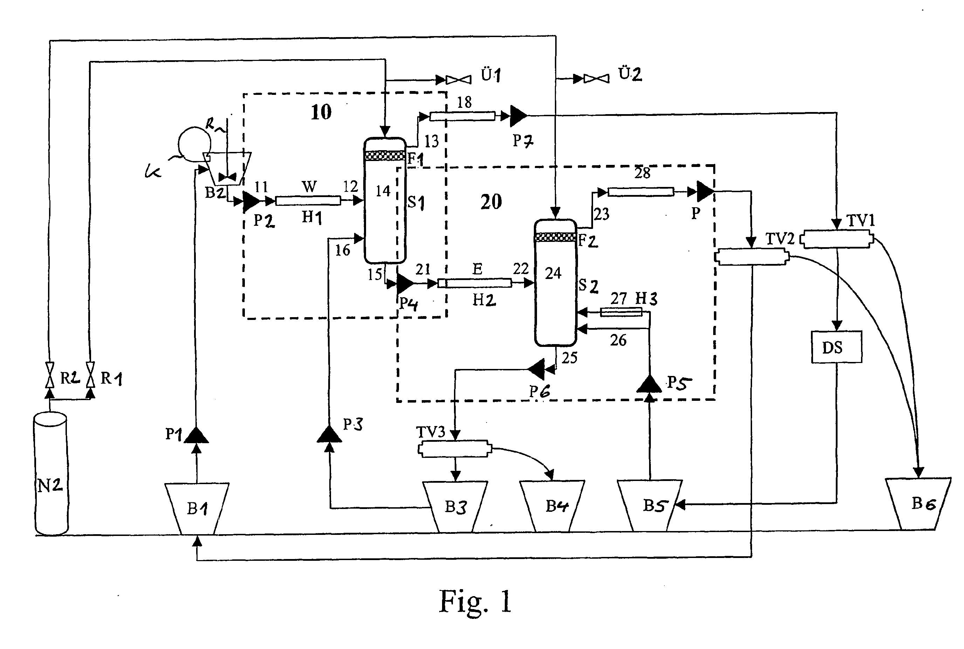

Figur 1 zeigt eine erfindungsgemäße Vorrichtung zum Waschen von Feststoffteilen und zum Extrahieren von Extrakten aus diesen Feststoffteilen, wobei bei der dargestellten Vorrichtung für einen Waschvorgang zum Waschen der Feststoffteile und einen Extraktionsvorgang zum Extrahieren der Extrakte dasselbe Lösungsmittel verwendet wird, sodass im Folgenden unter Waschmittel bzw. Lösungsmittel während des Waschvorgangs und unter Extraktionsmittel während des Extraktionsvorgangs dasselbe Mittel zu verstehen ist. Ein derartiges Lösungsmittel ist beispielsweise ein organisches Lösungsmittel, vorzugsweise ein Kohlenwasserstoff, besonders bevorzugt n-Pentan, n-Hexan oder n-Heptan.

Die in den Figuren dargestellte Vorrichtung eignet sich insbesondere zur Gewinnung von Extraktstoffen aus Pflanzen oder Pflanzenbestandteilen und dabei insbesondere zur Extraktion von Triterpenen aus Birkenkork.

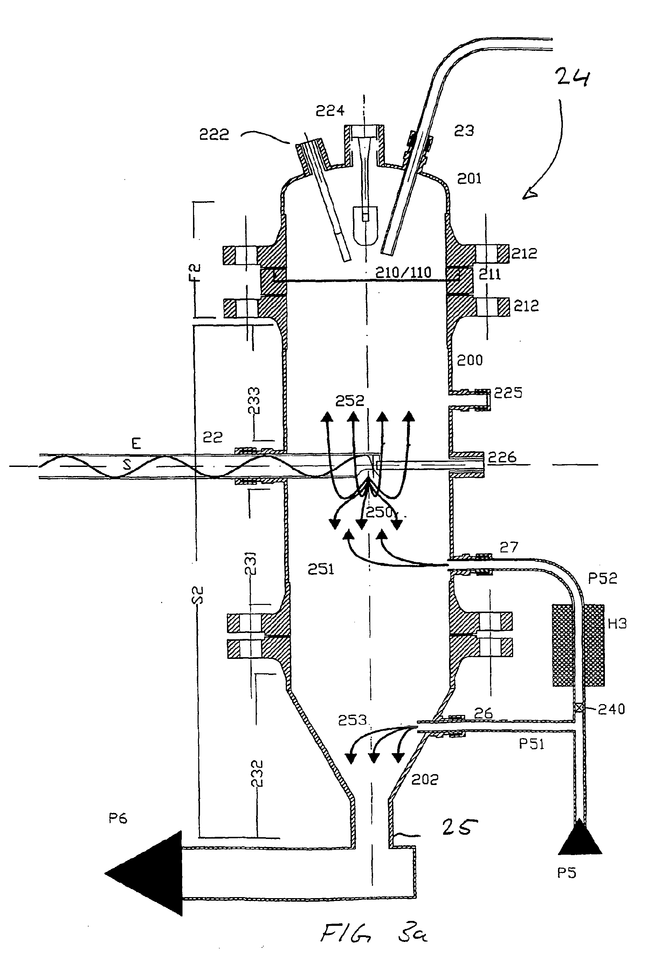

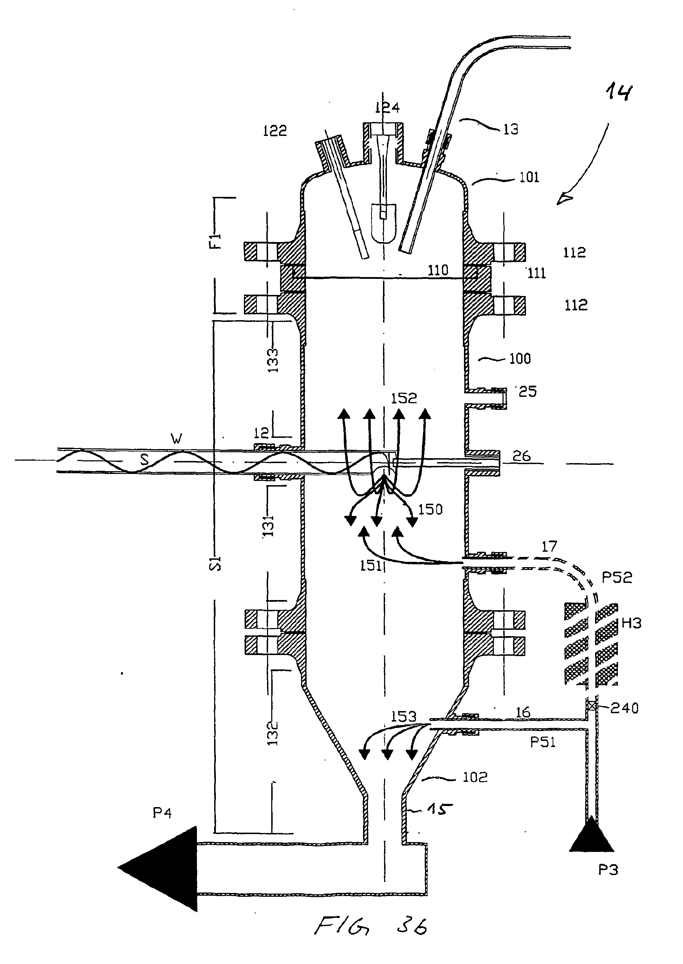

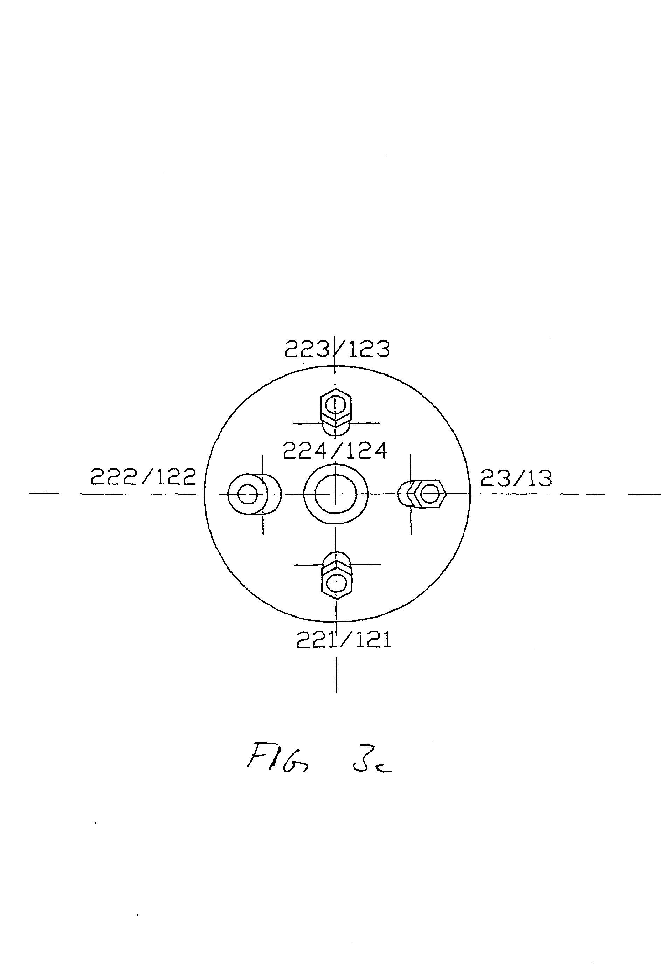

Kernstück der erfindungsgemäßen Vorrichtung ist eine Extraktionseinheit 20, die in dem Ausführungsbeispiel ein Extraktionsrohr E und eine Filter- und Sedimentationsanordnung 24 umfasst, wobei ein Ausführungsbeispiel einer solchen Filter- und Sedimentationsanordnung 24 in Figur 3 im Detail dargestellt ist.

Das Extraktionsrohr E umfasst einen Einlass 21, dem über eine Pumpe P4 ein Gemisch mit Feststoffteilen und einem Extraktionsmittel zugeführt ist, und einen Auslass, der in einen ersten Einlass 22 der nachgeordneten Filter- und Sedimentationsanordnung 24 mündet.

Der Extraktionsvorgang erfolgt bei der Extraktion von Triterpenen aus Birkenbestandteilen üblicherweise bei Temperaturen bis zu 200°C und bei Drücken bis zu 40 bar. Zur Erzielung solcher Temperaturen umfasst das Extraktionsrohr E eine außen angebrachte Heizvorrichtung H2. Der für die Extraktion erforderliche Druck wird durch die Pumpe P4 einer dem Extraktionsrohr E vorgeschalteten ersten Fördereinrichtung erzeugt, die entsprechend dimensioniert ist. Vorzugsweise wird dieser Druck durch eine schematisch dargestellte Inertgasanlage, die ein Reduzierventil R2 und ein Überdruckventil Ü2 aufweist, konstant gehalten. Das Extraktionsrohr E sowie die nachgeordnete Filter- und Sedimentationseinheit 24 sind für die während des Extraktionsvorganges auftretenden Temperaturen und Drücke ausgelegt und gegenüber dem für das Extrahieren verwendeten Extraktionsmittel bzw. Lösungsmittel beständig.

Die Extrakte werden bei der gewählten Temperatur und dem gewählten Druck aus den Feststoffteilen extrahiert und sind in dem Extraktionsmittel gelöst, wobei eine Trennung der Feststoffteile und des Extraktionsmittels mit den gelösten Extrakten in der Filter- und Sedimentationsanordnung 24 erfolgt. Die dargestellte Filter- und Sedimentationsanordnung 24 umfasst eine Filtereinheit F2 mit einem als Extraktauslass dienenden ersten Auslass 23, an dem Extraktionsmittel mit gelösten Feststoffteilen ausgeleitet wird und zur weiteren Verarbeitung zur Verfügung steht, und eine Sedimentationseinheit S2 mit einem zweiten Auslass 25, an dem die nach der Extraktion verbleibenden Feststoffteile zusammen mit einem Teil des Extraktionsmittels abgeführt werden, sowie in dem Beispiel zwei zweite Einlässe 26, 27, die beabstandet zu dem ersten Einlass 22 in der Sedimentationseinheit S2 angeordnet sind.

Der Aufbau und die Funktionsweise dieser Filter- und Sedimentationsanordnung 24 wird nachfolgend anhand von Figur 3a näher erläutert.

Die Filter- und Sedimentationsanordnung 24 umfasst einen langgestreckten druckfesten Behälter 200, der beabstandet zu einem oberen Ende 201 und beabstandet zu einem unteren Ende 202 einen ersten Einlass 22 aufweist, über den ein Gemisch mit Feststoffteilen und Extraktionsmittel zugeführt wird, wobei Extrakte bei der Ausführungsform gemäß Figur 1 bereits großen Teils in dem Extraktionsrohr E aus den Feststoffteilen extrahiert werden und in dem Extraktionsmittel gelöst vorhanden sind. Das Extraktionsrohr E ragt an dem ersten Einlass 22 in der dargestellten Weise vorzugsweise in den Behälter 200 hinein, und ist deshalb in Figur 3a zusammen mit der Filter- und Sedimentationsanordnung 24 dargestellt.

Der Behälter 200 unterteilt sich in eine Sedimentationseinheit bzw. eine Sedimentationszone S2 und eine Filtereinheit bzw. Filterzone F2, wobei die Filtereinheit F2 einen mittels Flanschen 212 und einer Filterhalterung 211 befestigten Filter 210 umfasst. Der langgestreckte Behälter 200 steht in betriebsbereitem Zustand in der dargestellten Weise senkrecht, wobei die Filtereinheit F2 oberhalb der Sedimentationseinheit S2 angeordnet ist. Der Einlass 22 mündet in dem Beispiel in die Sedimentationszone S2 des Behälters 200, er kann jedoch auch in den Grenzbereich zwischen der Sedimentationszone S2 und der Filtereinheit F2 münden.

Beabstandet zu dem Einlass 22 sind unterhalb dieses Einlasses 22 zwei als Extraktionsmitteleinlässe dienende zweite Einlässe, ein zweiter Einlass 26 und ein dritter Einlass 27, vorhanden, über welche in die Sedimentationszone S2 Extraktionsmittel zuführbar ist. Diese Einlässe 26, 27 sind an eine Fördereinrichtung mit einer Pumpe P5 und zwei Förderrohren angeschlossen sind, wobei ein an den dritten Extraktionsmitteleinlass 27 angeschlossenes Förderrohr mittels einer Heizvorrichtung H3 beheizt ist. Der dritte Einlass 27 mit dem beheizten Förderrohr ist näher an dem Einlass 22 als der unbeheizte zweite Extraktionsmitteleinlass 26 angeordnet. Der Extraktionsmittelzufluss über den dritten Einlass 27 ist dabei geringer als über den zweiten Einlass 26, was beispielsweise durch eine Drossel 240 in dem Förderrohr vor der Heizvorrichtung H4 erreicht wird. Der zweite und dritte Einlass 26, 27 sind in dem Beispiel beabstandet zu dem am unteren Ende angeordneten zweiten Auslass 25 angeordnet.

In der in Figur 3a dargestellten Filter- und Sedimentationsanordnung werden Extrakte aus den Feststoffteilen extrahiert und Extraktionsmittel mit gelösten Extrakten bzw. Extraktionslösung wird von den Feststoffteilen getrennt. Die Feststoffteile in dem über den Einlass 22 zugeführten Gemisch mit Feststoffteilen und Extraktionsmittel sinken in dem Behälter 200 ab bzw, sedimentieren, was schematisch durch Pfeile 250 dargestellt ist. Durch das über den dritten Extraktionsmitteleinlass 27 zugeführte Extraktionsmittel wird in einer Richtung 251 entgegen der Sedimentationsrichtung 250 ein Extraktionsmittelgegenstrom erzeugt, der so eingestellt ist, dass die Feststoffteile langsam absinken. Dieser Gegenstrom 251 bewirkt weiterhin, dass Lösungsmittel mit gelösten Extrakten, also die Extraktionslösung, in der durch die Pfeile 252 eingezeichneten Richtung nach oben das Filter 210 durchströmen, sodass am Ausgang 23 eine gefilterte Extraktionslösung zur weiteren Verarbeitung bereitsteht. Das Filter 210 dient dabei im Wesentlichen zum Filtern kleiner Feststoffpartikel, die ebenfalls in dem Gegenstrom nach oben getrieben werden. Das Filter 210 ist beabstandet zu dem ersten Einlass 22 angeordnet, wobei ein Bereich 233 des Behälters 200 zwischen dem Einlass 22 und dem Filter 210 als Beruhigungszone dient, um zu verhindern, dass durch Verwirbelungen im Bereich des ersten Einlasses 22 größere Mengen an Feststoffteilen bis an das Filter 210 getrieben werden.

Die in dem Druckbehälter 200 sedimentierenden Feststoffteile werden am unteren Ende 202 des Behälters über den Auslass 25 abgeführt. Die Ausleitung dieser Feststoffteile über den zweiten Auslass wird durch das Extraktionsmittel gefördert, welches über den zweiten Extraktionsmitteleinlass 26 zugeführt wird und welches eine durch die Pfeile 253 schematisch dargestellte Strömung erzeugt.

Bei der Filter- und Sedimentationsanordnung gemäß Figur 3a sinken die Feststoffteile stets durch eine frische Extraktionsmittelschicht, die durch das über die Einlässe 26, 27 zugeführte Extraktionsmittel gebildet wird. Die Feststoffteile werden in dem aus diesem Extraktionsmittel resultierenden Gegenstrom 251 besonders effektiv extrahiert, wobei dieser Gegenstrom zudem eine Trennung der Feststoffteile von der Extraktionslösung bewirkt.

Es sei darauf hingewiesen, dass die wesentliche Trennung der die Extrakte enthaltenden Extraktionslösung und der Feststoffteile in der Sedimentationszone S2 erfolgt, in der die Feststoffteile nach unten gegen die Schwerkraft absinken und das im Gegenstrom mit Extrakten angereicherte Extraktionsmittel nach oben in Richtung des ersten Auslasses 23 strömt. Das Filter 210 ist optional vorhanden und stellt sicher, dass Feststoffteile die mit dem Strom 252 nach oben gelangen nicht über den ersten Auslass 23 zusammen mit der Extraktionslösung ausgeleitet werden.

Ebenfalls optional ist die Aufteilung des neben dem ersten Extraktionsmitteleinlass 22 vorhandenen Extraktionsmitteleinlasses in einen zweiten unbeheizten und einen dritten beheizten Extraktionsmitteleinlass 26, 27. Statt dieser beiden Einlässe kann auch lediglich ein unbeheizter Einlass, beispielsweise der Einlass 26, vorgesehen werden. So ist bei einer nicht näher dargestellten Ausführungsform vorgesehen, nur einen Extraktionsmitteleinlass im Bereich der Sedimentationseinheit S2 vorzusehen, beispielsweise den zweiten Extraktionsmitteleinlass 26. Das über diesen Extraktionsmitteleinlass 26 zugeführte Extraktionsmittel erzeugt gesteuert über den Abfluss durch den Auslass 25 dabei sowohl den Gegenstrom 251 zum Trennen von Feststoffteilen und Extraktionslösung als auch den Abflussstrom 253.

Der für den Extraktionsvorgang erforderliche Druck wird durch die in Figur 1 dargestellte Inertgasanlage N2 und das Reduzierventil R2 erreicht. Die Pumpe P4 vor dem Einlass 21 des Extraktionsrohres, die Pumpe P5, die Extraktionsmittel den Einlässen 26, 27 zuführt, eine Pumpe P6 am Auslass 25 und eine Pumpe P8 nach dem Auslass 23 schließen einen Extraktionsraum der gestrichelt dargestellten Extraktionseinheit 20 nach außen druckdicht ab und sind so aufeinander abgestimmt, dass die gewünschten Flüsse und Strömungsverhältnisse eingehalten werden. Bei einer anderen nicht näher dargestellten Ausführungsform ist die Pumpe P8 durch ein gesteuertes Ventil und eine Düse ersetzt.

Das Extraktionsrohr E und die Pumpen sind ferner so aufeinander abgestimmt, dass in dem Extraktionsrohr E Fließgeschwindigkeiten von vorzugsweise 1 bis 5 cm/sec erreicht werden. Um eine Sedimentation der Feststoffteile in dem Extraktionsrohr E zu verhindern, umfasst das Extraktionsrohr E vorzugsweise eine Verwirbelungsvorrichtung S, z.B. eine Spirale, die eine Verwirbelung in dem Rohr E bewirkt, wie dies beispielsweise in Figur 3 veranschaulicht ist. Bei einer Ausführungsform ist die Spirale S durch die als Exzenterschneckenpumpe ausgebildete Pumpe P4 angetrieben.

Neben den bereits erläuterten Ein- und Auslässen umfasst der in Figur 3a dargestellte Behälter 200 der Filter- und Sedimentationsanordnung eine Anzahl weiterer Öffnungen, die insbesondere aus der Draufsicht in Figur 3c ersichtlich sind, wobei eine Öffnung 221 beispielsweise als Serviceöffnung, eine Öffnung 222 und eine Öffnung 226 beispielsweise zur Temperaturmessung, eine Öffnung 224 beispielsweise zur Füllstandsmessung und eine Öffnung 225 beispielsweise zur Druckmessung in dem Behälter dienen kann. Die Lage dieser Öffnungen wird insbesondere anhand der beigefügten Figur 3c deutlich, die eine Draufsicht auf den Behälter von oben zeigt.

Bei einer weiteren nicht näher dargestellten Ausführung besteht die Möglichkeit, über die Anschlüsse 221 und 225 eine Rückspülungsvorrichtung für den Filter 210 vorzusehen.

Der Durchmesser des Behälters 200 sowie die Drücke des Gemisches am Einlass 22 sowie des zugeführten Extraktionsmittels sind so aufeinander abgestimmt, dass der Gegenstrom 251 des Extraktionsmittels gegen das sedimentierende Feststoffmaterial in der Sedimentationszone S2 vorzugsweise weniger als 0,01 cm/sec beträgt, und dass die Fließgeschwindigkeit der Extraktionslösung, die über den Extraktauslass 23 ausgeleitet wird, in der Beruhigungszone 233 vorzugsweise weniger als 0,1 cm/sec beträgt.

Das dem Einlass 21 des Extraktionsrohres E zugeführte Gemisch mit Feststoffteilen und Extraktionsmittel bzw. Lösungsmittel wird in dem Ausführungsbeispiel gemäß Figur 1 durch eine Wascheinheit 10 bereitgestellt, die ein Waschrohr W sowie eine Filter- und Sedimentationsanordnung 14 aufweist. Die Wascheinheit 10 und die Extraktionseinheit 20 gleichen sich grundsätzlich im Aufbau, können hinsichtlich ihrer Temperaturfestigkeit und Druckfestigkeit jedoch unterschiedlich dimensioniert sein, sofern in der Wascheinheit lediglich ein Waschen der Feststoffteile und keine Vorextraktion erfolgen soll, da üblicherweise für den Waschvorgang niedrigere Drücke und Temperaturen als für den Extraktionsvorgang erforderlich sind, um eine Extraktion bereits während des Waschvorgangs gering zu halten. Die Wascheinheit 10 dient zum Waschen von Feststoffteilen mittels eines Lösungsmittels vor der Extraktion.

Das Waschrohr W umfasst einen Einlass 11, über welchen eine Mischung mit Feststoffteilen und Lösungsmittel zugeführt wird, und einen Auslass, der in einen Einlass 12 der nachgeordneten Filter- und Sedimentationsanordnung 14 mündet.

Dem Waschrohr W ist über seinen Einlass 11 ein Gemisch mit Feststoffteilen und Waschmittel/Lösungsmittel zugeführt. Das Waschrohr W umfasst eine Heizvorrichtung H1, die dazu dient, die Mischung aus Lösungsmittel und Feststoffteilen auf eine für den Waschvorgang geeignete Temperatur zu erhitzen. Das Waschrohr W ist darüber hinaus druckfest, um Waschvorgänge bei geeigneten Drücken, vorzugsweise bei Drücken zwischen 1 bar und 35 bar zu ermöglichen. Die Heizvorrichtung H1 ist vorzugsweise außerhalb des Rohres angeordnet und derart gestaltet, dass die das Rohr durchfließende Mischung bereits in dem sich an den Einlass 11 anschließenden ersten Drittel des Waschrohrs W auf die gewünschte Temperatur erwärmt wird.

Der Durchmesser des Waschrohres W und die Pumpen P1, P2 einer noch zu erläuternden Fördereinrichtung sind so aufeinander abgestimmt, dass eine vergleichsweise niedrige Fließgeschwindigkeit, vorzugsweise im Bereich zwischen 1 bis 5 cm/sec in dem Waschrohr W erreicht wird. Um eine Sedimentation der Feststoffteile in dem Waschrohr W bei diesen geringen Fließgeschwindigkeiten zu verhindern, ist in dem Waschrohr W vorzugsweise eine Verwirbelungsvorrichtung, z.B. eine Spirale vorgesehen, die die Mischung aufwirbelt. Diese Verwirbelungsvorrichtung kann von außen durch einen separaten Antrieb angetrieben werden. Bei einer besonders bevorzugten Ausführungsform wird die Verwirbelungsvorrichtung vom Rotor, der als Exzenterschneckenpumpe ausgebildeten Pumpe P2 angetrieben, sodass stets dann, wenn die Mischung gefördert wird, auch eine Sedimentation verhindert sowie die Erwärmung und der Kontakt mit der Waschlösung gefördert wird.

Der Aufbau der in Figur 3b im Detail dargestellten Filter- und Sedimentationsanordnung 14 der Wascheinheit 10 entspricht im Wesentlichen der anhand von Figur 3a erläuterten Filter- und Sedimentationsanordnung 24 der Extraktionseinheit 20, sodass hierzu größtenteils auf die hier vorangehende Erläuterung verwiesen werden kann. Die Draufsicht in Figur 3c gilt auch für die Anordnung nach Figur 3b. Um funktionsmäßig übereinstimmende Teile und Abschnitte der Filter- und Sedimentationsanordnungen in den Figuren 3a und 3b besser erkennen zu können, sind für die sich entsprechenden Teile und Bereiche Bezugszeichen gewählt, die sich lediglich jeweils in der ersten Ziffer unterscheiden, wobei die Bezugszeichen in Figur 3b für die Waschvorrichtung mit einer 1 und die Bezugszeichen in Figur 3a für die Extraktionsvorrichtung mit einer 2 beginnen.

Es sei aber darauf hingewiesen, das eine einzelne der in den Figuren 3a und 3b dargestellten Einheiten sowohl zum Waschen, zum Extrahieren, als auch zum Umkristallisieren verwendet werden kann, wobei sich lediglich die Druckfestigkeiten der Behälter abhängig vom Verwendungszweck unterscheiden können.

Für die Erläuterung sei zunächst davon ausgegangen, dass die Anordnung 14 gemäß der Figuren 1 und 3b zum Waschen der Feststoffteile dient, die in dem über den Einlass 12 zugeführten Feststoff-Lösungsmittel-Gemisch enthalten sind. Die Anordnung 14 umfasst bezugnehmend auf Figur 3b einen druckfesten Behälter 100, der sich in eine Sedimentationseinheit bzw. Sedimentationszone S1 und eine Filtereinheit bzw. Filterzone F1, die oberhalb der Sedimentationseinheit S1 angeordnet ist, unterteilt. Der erste Einlass 12 mündet in dem Ausführungsbeispiel in die Sedimentationseinheit S1, wobei unterhalb dieses Einlasses 12 ein als Waschmitteleinlass bzw. Lösungsmitteleinlass dienender zweiter Einlass 16 angeordnet ist, dem über eine Fördereinrichtung Lösungsmittel zum Waschen der Feststoffteile zugeführt ist. Das über diesen zweiten Einlass 16 zugeführte Lösungsmittel erzeugt in dem Behälter 100 einen Gegenstrom 151 zu der Bewegungsrichtung 150 der Feststoffteile, die in dem Behälter 100 der Schwerkraft folgend absinken. Der größere Teil des über den Eingang 16 zugeführten Lösungsmittels erzeugt weiterhin einen in Richtung des Auslasses 15 gerichteten Strom 153, der zum Ausleiten der gewaschenen Feststoffteile dient. Die über den Einlass 12 zugeführten Feststoffteile sinken bei der dargestellten Vorrichtung stets durch eine frische Lösungsmittelschicht und werden in dieser Lösungsmittelschicht bei den in der Anordnung eingestellten Temperaturen und Drücken gewaschen, wobei die gewaschenen Feststoffteile durch den Lösungsmittelstrom 153 über den Auslass 15 ausgeleitet werden. Das verunreinigte Lösungsmittel wird über den Gegenstrom in der mit 152 bezeichneten Richtung nach oben getrieben. Optional besteht die Möglichkeit, einen weiteren, beheizten Wasch- oder Lösungsmitteleinlass 17 vorzusehen, der in Figur 3b gestrichelt dargestellt ist.

Die in Figur 3b dargestellte Filtereinheit F1 mit dem Filter 110 ist, wie auch der Filter 210 gemäß Figur 3a, optional vorhanden. Der Großteil der Feststoffteile sinkt in der Sedimentationszone S1 ab und wird zusammen mit einem Teil des Lösungsmittels über den zweiten Ausgang 15 ausgeleitet. Der Filter 110 dient lediglich dazu nach oben getriebene feine Feststoffteile abzutrennen. Das verunreinigte Lösungsmittel wird über den Auslass 13 ausgeleitet.

Die dargestellte Filter- und Sedimentationsanordnung 14 ermöglicht ein besonders effektives Waschen der Feststoffteile im Lösungsmittelgegenstrom des Behälters 100.

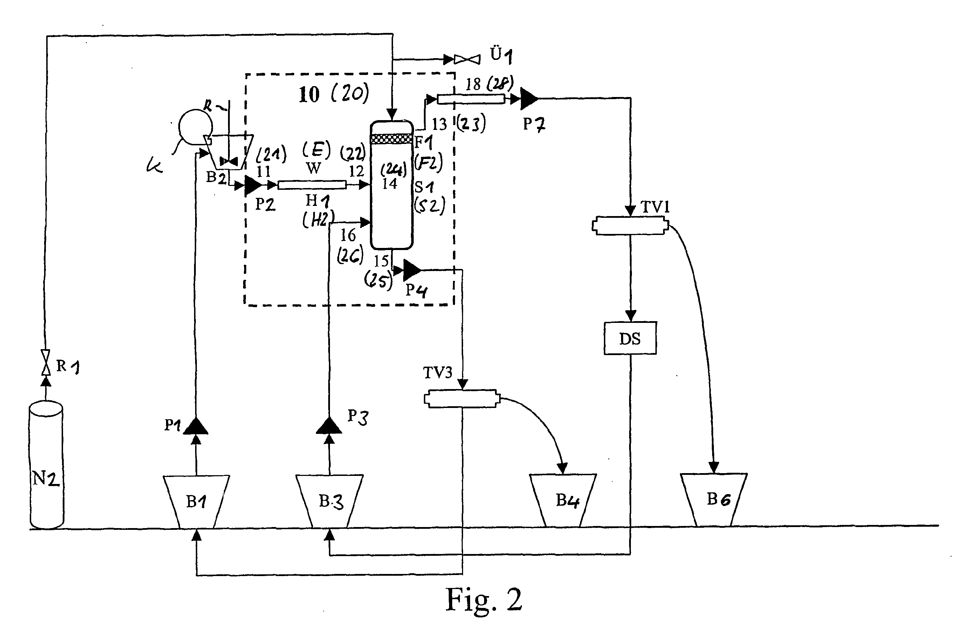

Wie erläutert, dient die größere Menge des über den Einlass 16 zugeführten Lösungsmittels zum Spülen des gewaschenen Feststoffmaterials nach unten in Richtung des Auslasses 15 der Sedimentationseinheit S2 bzw. des Sedimentationsrohres. Der rohrförmige Behälter 100 verjüngt sich vorzugsweise ausgehend von dem Lösungsmitteleinlass 16 konisch nach unten, um dadurch eine Fließgeschwindigkeit des Feststoffmaterials mit dem Lösungsmittel von vorzugsweise 1 bis 5 cm/sec zu erreichen, wobei die Fördereinrichtung mit der Pumpe P3 und der Behälter 100 vorzugsweise so dimensioniert sind, dass sich das gleiche Mischungsverhältnis von Feststoffmaterial zu Lösungsmittel wie am Einlass 11 des Waschrohres W einstellt. Die am Auslass 15 zur Verfügung stehende Suspension wird über die erste Fördereinrichtung mit der Pumpe P4 der Extraktionseinheit 20 zur Extraktion zugeführt. Die in den Figuren 3a und 3b dargestellten Filter- und Sedimentationseinheiten 24, 14 können auch zur Umkristallisation von Feststoffen verwendet werden, wie nachfolgend anhand von Figur 2 noch erläutert wird.

Wie oben erwähnt, ist die zum Waschen eingestellte Temperatur und der gewählte Druck geringer als die jeweiligen Parameter während des Extraktionsvorgangs. Selbstverständlich besteht jedoch auch die Möglichkeit, dass bereits in der bislang als Wascheinheit bezeichneten Einheit 10, die entsprechend der Extraktionseinheit 20 aufgebaut ist, eine teilweise Extraktion der Feststoffteile erfolgt. Die Einheit 10 dient dann neben der Extraktionseinheit 20 als zweite Extraktionseinheit, wobei die Einheit dann hinsichtlich Temperatur- und Druckfestigkeit geeignet dimensioniert ist. Zur Optimierung der Extraktion ist die Vorrichtung durch Hinzufügen weiterer Einheiten, die entsprechend der zuvor erläuterten Einheiten 10, 20 aufgebaut sind, erweiterbar, wobei die Feststoffteile einer Einheit jeweils der nachfolgenden Einheit zur weiteren Extraktion zugeführt werden, wie dies in Figur 1 für die Einheiten 10, 20 dargestellt ist.

Zur Bereitstellung der Mischung mit Feststoffteilen und Lösungsmittel umfasst die Vorrichtung einen Behälter B2, der an eine Zuführeinrichtung K für Feststoffteile und an eine Zuführeinrichtung für ein zum Waschen der Feststoffteile geeignetes Waschmittel, insbesondere ein Lösungsmittel, angeschlossen ist. Die Zuführeinrichtung K für die festen Stoffe umfasst beispielsweise eine herkömmliche Zerkleinerungsvorrichtung, die feste Stoffe so zerkleinert, dass sie suspendiert werden können. Die Feststoffteile werden vorzugsweise mit Hilfe einer Dosiervorrichtung kontinuierlich in den Behälter B2 gefördert. Die Zuführeinrichtung für das Lösungsmittel umfasst in dem Beispiel einen Lösungsmittelbehälter B1, der über eine Fördervorrichtung, die mindestens eine Pumpe P1 umfasst, an den Behälter B2 angeschlossen ist. Die Dosiervorrichtung K für den Feststoff und die Förderrate der Pumpe P1 sind so aufeinander abgestimmt, dass in dem Behälter B2 das gewünschte Mischungsverhältnis von Feststoff zu Waschmittel/Lösungsmittel eingestellt ist.

In dem dargestellten Beispiel hat der Behälter B2 unten einen vorzugsweise konisch geformten Auslass, der unmittelbar an eine Fördervorrichtung P2 angeschlossen ist, die das Gemisch aus dem Behälter B2 in das Waschrohr W fördert. Bei einer besonderen Ausführungsform wird das Lösungsmittel der Behälter B2 so zugeführt, dass es von oben an den Behälterwänden herunter rieselt, und der zentral eingeführte Feststoff durch die auf einem bestimmten Niveau gehaltene Flüssigkeitsoberfläche sinkt. Bei einer weiteren besonders bevorzugten Ausführungsform wird die Mischung mit einem Rührer R gerührt.

Die Behälter B1 und B2 sind über die Fördereinrichtung P2 an die Waschvorrichtung 10 angeschlossen, um wahlweise die in dem Behälter B2 entstehende Mischung aus Feststoffteilen und Lösungsmittel oder zum Zwecke des Flutens oder Reinigens reines Lösungsmittel der Waschvorrichtung 10 zuführen zu können. Die zweite Fördervorrichtung P2, die wenigstens eine Pumpe aufweist, dient dazu, das Gemisch in die Wascheinheit 10 zu dosieren und den erforderlichen Druck einzustellen.

An den Auslass der Sedimentationskolonne S2 der Extraktionseinheit 24 schließt sich in dem Beispiel eine nachfolgende Pumpe P6 an, die flussgeregelt die extrahierten Feststoffteile und das Lösungsmittel vom Auslass 25 der Filter- und Sedimentationsanordnung 24 bzw, der Sedimentationskolonne Slausschleust, wobei der Druck abgebaut wird. Gleichzeitig führt sie diese Mischung einer kontinuierlich oder diskontinuierlich arbeitenden Trennvorrichtung TV3 für Extrakt und Lösungsmittel zu.

Die Trennvorrichtung TV3 kann ein herkömmlicher Filter zur Trennung von Feststoff und Lösungsmittel oder auch eine kontinuierlich arbeitende Zentrifuge sein. Daran schließt sich eine Trocknungseinrichtung B4 zur Trocknung der Feststoffteile an . Das gefilterte Lösungsmittel wird dem Behälter B3 zugeführt, der den Lösungsmitteleinlass 16 der Sedimentationskolonne Sl der Waschvorrichtung 10 speist. Kondensat aus der Trocknung wird dem Behälter B5 zugeführt.

Dem Extraktauslass 23 der Filtereinrichtung F2 ist bei einer besonderen Ausführungsform eine Kühlkristallisationsvorrichtung 28 nachgeordnet, aus der die entstehende Extraktstoffsuspension mittels einer Fördervorrichtung, die mindestens eine Pumpe P8 enthält, ausgeschleust wird, wobei der Druck abgebaut wird. Gleichzeitig führt die Pumpe P8 die Suspension einer kontinuierlich oder diskontinuierlich arbeitenden Trennvorrichtung TV2 für Extraktstoffe und Lösungsmittel zu.

Bei einer anderen, nicht näher dargestellten Ausführungsform wird die Extraktlösung über ein Ventil und eine Düse in eine Kühlkristallisationsvorrichtung gesprüht, wodurch Extraktstoffe teilweise kristallisieren.

Das aus der Trennvorrichtung TV2 abgetrennte Lösungsmittel wird dem Lösungsmittelbehälter B1 zugeführt, der den vor der Wascheinheit 10 angeordneten Behälter B2 speist. Die Trennvorrichtung TV2 ist vorzugsweise auch dazu ausgebildet, den Extrakt nachzuwaschen und/oder zu trocknen. Daran schließt sich eine Trocknung in einer Trocknungseinheit B6 (vgl. Figuren 1 und 2)an. Kondensat aus der Trocknung wird dem Behälter B5 zugeführt.

Die in Figur 1 dargestellte Vorrichtung umfasst einen resourcensparenden Lösungsmittelkreislauf für das Lösungsmittel, das sowohl zum Waschen der Feststoffteile als auch zum Extrahieren des Feststoffes verwendet wird. So wird in der erläuterten Weise das vom kristallisierten Extrakt in der Trennvorrichtung TV2 abgetrennte Lösungsmittel in den Behälter B1 zur Herstellung der Ausgangsmischung geleitet. Ebenso wird das vom extrahierten Feststoffmaterial in der Trennvorrichtung TV3 abgetrennte Lösungsmittel über den Behälter B3 der Pumpe P3 zugeführt, die die Sedimentationskolonne S1 der Waschvorrichtung speist.

Lediglich das verunreinigte Lösungsmittel, das am Auslass 13 aus der Waschvorrichtung ausgeschleust wird, wird mittels einer Destillationsvorrichtung DS redestilliert, wobei das Destillat dem Behälter B5 zur Speisung der Sedimentationskolonne S2 der Extraktionsvorrichtung 20 zugeführt wird.

Sofern die Einheit 10 bereits zur Extraktion der Feststoffteile verwendet wird, ist der erste Auslass 13 der Filter- und Sedimentationsanordnung optional an eine Kühlkristallisationsvorrichtung 18 und eine Trennvorrichtung TV1 angeschlossen, die das Extraktionsmittel und die suspendierten Extraktstoffe trennt. Wie in Figur 1 schematisch dargestellt ist, besteht hierbei die Möglichkeit, die durch die Trennvorrichtungen TV1 und TV2 abgetrennten Extraktstoffe vereint der Trocknung zuzuführen. Das stärker verunreinigte Lösungsmittel aus der Trennvorrichtung TV1 wird auch in diesem Fall der Destillationsanlage DS zugeführt.

Wie bereits erläutert, sind die in Figur 1 aufeinanderfolgenden Einheiten, die bislang mit Wascheinheit 10 und Extraktionseinheit 20 bezeichnet wurden, gleich aufgebaut, wobei über deren Funktion in der dargestellten Anordnung die eingestellten Temperatur- und Druckverhältnisse entscheiden.

So besteht die Möglichkeit, den Druck und die Temperatur in der Einheit 10 so einzustellen, dass im Wesentlichen ein Waschen der Feststoffe stattfindet, wobei die gewaschenen Stoffe am Ausgang 15 zur weiteren Verarbeitung in der Einheit 20 zur Verfügung stehen. Die Temperatur und die Drücke in der nachfolgenden Einheit 20 werden dabei vorzugsweise so eingestellt, dass diese zur Extraktion der gewaschenen Feststoffe dient, wobei die Extrakte am Ausgang 23 und die extrahierten Feststoffe am Ausgang 25 zur Verfügung stehen.

Außerdem besteht auch die Möglichkeit, die Drücke und die Temperaturen in den Einheiten 10 und 20 so einzustellen, dass in beiden Einheiten 10, 20 eine Feststoffextraktion stattfindet, wodurch ein zweistufiges Extraktionsverfahren realisierbar ist. Dieses Verfahren lässt sich durch Kaskadierung weiterer, den Einheiten 10, 20 entsprechender Einheiten erweitern.

Figur 2 zeigt ein Ausführungsbeispiel einer erfindungsgemäßen Anordnung, die sich von der in Figur 1 dargestellten dadurch unterscheidet, dass sie nur eine der in Figur 1 vorhandenen Einheiten 10, 20 aufweist, wobei in Figur 2 ohne Beschränkung der Allgemeinheit die bereits zuvor erläuterte Einheit 10 als die eine Einheit dargestellt ist. Selbstverständlich kann diese Einheit 10 auch durch die Einheit 20 ersetzt werden, wie durch die Bezugszeichen in Klammern angedeutet ist. Die Einheit 10 ist in der bereits zuvor erläuterten Weise an die Zuführeinrichtungen B1, K, B2 und die Abführeinrichtungen TV1, DS, B6 angeschlossen ist, mit dem Unterscheid, dass die Einheit 10 in Figur 2 auch an die zuvor erläuterten Behälter B3 und B4 angeschlossen ist.

Diese in Figur 2 dargestellte Anordnung mit der ein beheizbares Rohr W und eine Filter- und Sedimentationsanordnung 14 aufweisenden Einheit 10 dient abhängig von den eingestellten Temperatur- und Druckverhältnissen zum Waschen von Feststoffen, die nach Abschluss des Verfahrens in dem Behälter B4 zur Verfügung stehen, oder zur Extraktion von Feststoffen, wobei das Extrakt in dem Behälter TV1 und die extrahierten Feststoffe in dem Behälter B4 zur Verfügung stehen. Die Feststoffe werden dabei in der erläuterten Weise durch über die Zuführeinheit K und den Mischer mit dem Rührer R dem Einlass des beheizten Rohres W zugeführt.

Außerdem kann die in Figur 2 dargestellte Vorrichtung 10 mit dem beheizbaren Rohr W und einer Filter- und Sedimentationsanordnung 14 gemäß der Figuren 3a oder 3b neben dem Waschen von Feststoffteilen und dem Extrahieren von Feststoffteilen auch für eine Umkristallisation verwendet werden. Dazu wird der umzukristallisierende Stoff über die Zuführeinheit K in dem Behälter B2 mit einem Lösungsmittel gemischt und dem beheizbaren Rohr W zugeführt. Das Extrakt wird in dem Rohr, idealerweise unter Überdruck, heiß im Lösungsmittel gelöst und der Filter- und Sedimentationseinheit über den Einlass 12 zugeführt. Feste Verunreinigungen werden durch Sedimentation abgetrennt, und Lösungsmittel mit darin gelöstem Extrakt wird über den Auslass 13 abgeführt und anschließend in der bereits erläuterten Kühlkristallisationseinrichtung kristallisiert und in der Trennvorrichtung TV1 von dem Lösungsmittel getrennt. Lösliche Verunreinigungen bleiben nach der Kühlkristallisation im Lösungsmittel und werden durch Redestillation entfernt.

Je nach Dichteunterschied zum Lösungsmittel kann die Filter- und Sedimentationseinheit auch umgekehrt betrieben werden, so dass das Lösungsmittel mit dem Extrakt am Ausgang 15 zur Verfügung stehen kann, wobei eine Kühlkristallisations- und Trennvorrichtung dann entsprechend dem Auslass 15 nachzuordnen ist.

Vorzugsweise wird bei der erfindungsgemäßen Vorrichtung der Innenraum zwischen der Schneckenpumpe P2 am Einlass 11 der Waschvorrichtung, der Pumpe P3, die den Lösungsmitteleinlass 16 der Sedimentationskolonne S1 speist, der Pumpe P4 zwischen der Waschvorrichtung 10 und der Extraktionsvorrichtung 20 und der Pumpe P7 oder dem oben erwähnten Ventil, das zwischen dem Lösungsmittelauslass 13 und der ebenfalls oben erwähnten Düse angeordnet ist, mit einem Schutzgas, vorzugsweise Stickstoff, beaufschlagt, das in einem schematisch dargestellten Behälter N2 bereitgehalten wird. Diese Vorrichtung ermöglicht die Einstellung eines konstanten Drucks mit Hilfe des Reduzierventils R1 und des Überdruckventils Ü1, wodurch die Gleichmäßigkeit des Betriebs verbessert wird. Vorzugsweise ist auch der Innenraum zwischen der Pumpe P4, die das Extraktionsrohr speist, der Pumpe P5, die die Extraktionsmitteleinlässe 26, 27 der Sedimentationskolonne S2 versorgt, der Pumpe P6, die die Feststoffteile und das Lösungsmittel am Auslass 25 der Sedimentationskolonne S2 ausschleust, sowie der Pumpe P8 oder dem oben erwähnten Ventil vor der oben erwähnten Düse der Sprüheinrichtung mit Schutzgas beaufschlagt, so dass mittels Reduzierventil R2 und Überdruckventil Ü2 auch hier der geforderte Betriebsdruck konstant gehalten werden kann.

Wie bereits erläutert umfassen das Waschrohr W und/oder das Extraktionsrohr E eine im Inneren angeordnete Verwirbelungsvorrichtung, die ein langsames Fließen der Suspension mit den Feststoffteilen und dem Lösungsmittel bzw. dem Extraktionsmittel bewirkt. Die Figuren 3a, 3b zeigen im Querschnitt schematisch den Aufbau eines solchen Wasch- oder Extraktionsrohres, wobei über die Verwendung als Wasch- oder Extraktionsrohr die Druckfestigkeit des Rohres entscheidet. Das Bezugszeichen S in den Figuren 3a, 3b bezeichnet die Verwirbelungsvorrichtung, die in einer besonderen Ausführungsform als Spirale gestaltet ist und die sich über die gesamte Länge des Wasch- bzw. Extraktionsrohres erstreckt und die an einem dem Einlass zugewandten Ende eine Befestigungsvorrichtung BF zur Befestigung der Spirale an einem nicht näher dargestellten Rotor aufweist. Der Rotor ist vorzugsweise Teil der jeweiligen Schneckenpumpe P2 bzw. P4, die Suspension in das Wasch- oder Extraktionsrohr fördert. Die Spirale ragt vorzugsweise über das Ende des Rohres W, E hinaus und in die jeweilige Filter- und Sedimentationseinheit 14, 24 hinein.

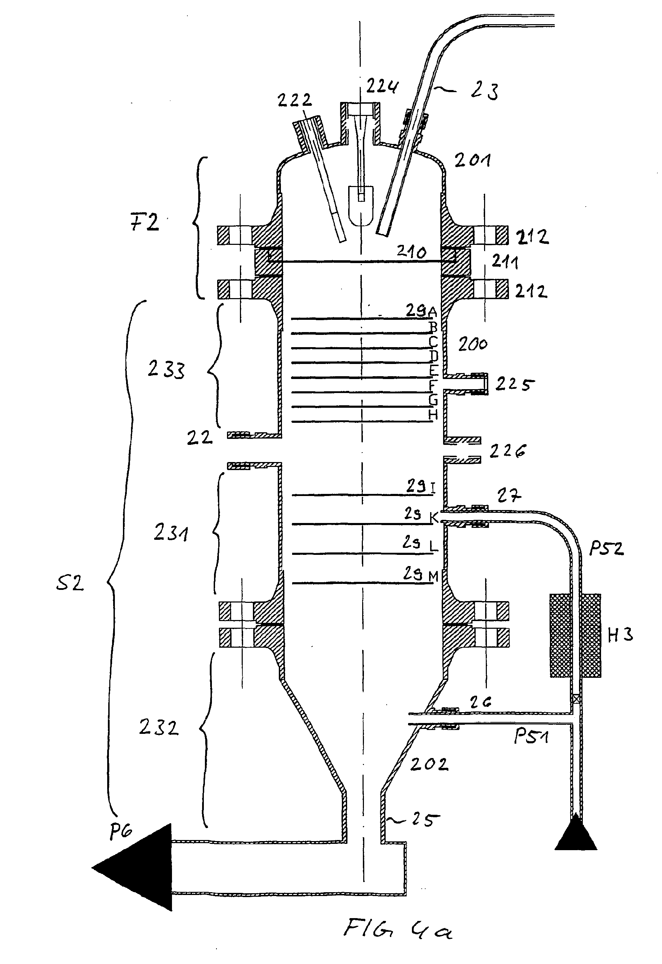

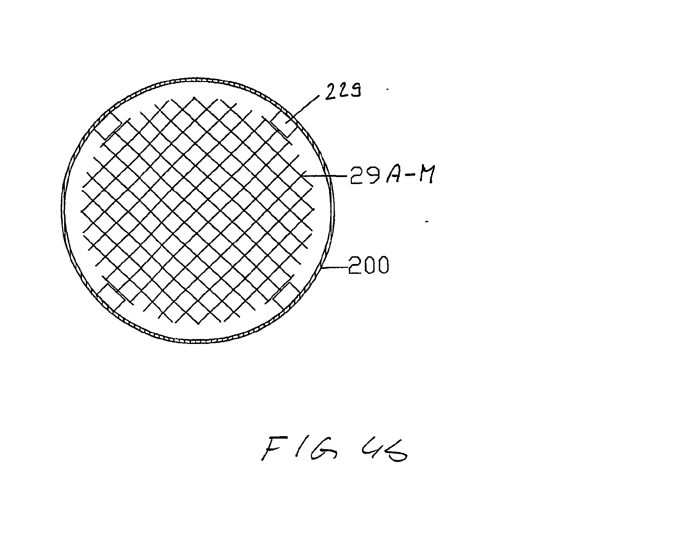

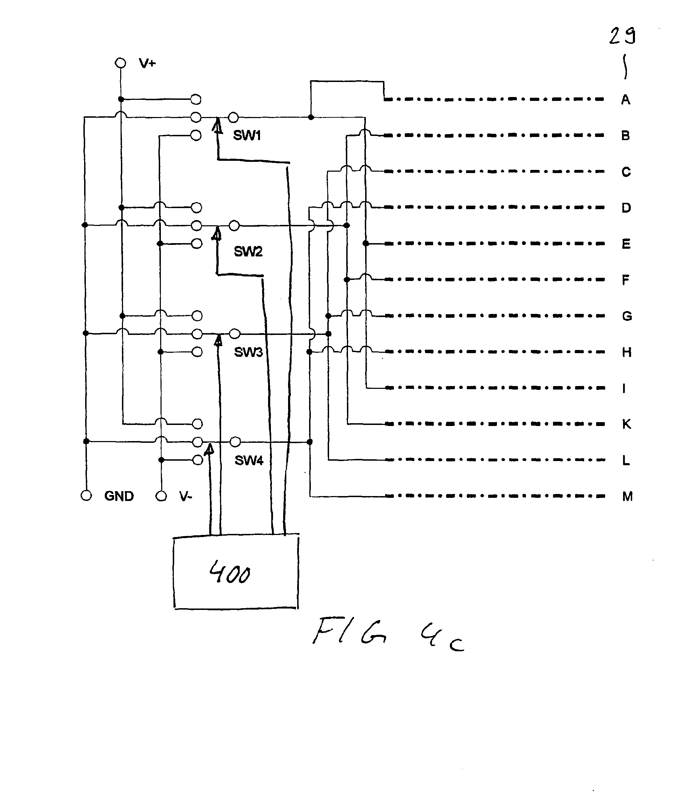

Die zuvor anhand der Figuren 3a und 3b erläuterte Filter- und Sedimentationsanordnung weist vorzugsweise ein Staubfilter auf, das nachfolgend anhand der bereits zuvor in Figur 3a erläuterten Anordnung 24 in Figur 4a erläutert wird. Das Staubfilter umfasst bezugnehmend auf Figur 4a mehrere in Längsrichtung des Behälters 200 in der Sedimentationszone angeordnete Gitter 29A-29M, die sich vorzugsweise ringsum bis dicht an die Behälterwand erstrecken und gegen die Behälterwand isoliert sind. Eine Draufsicht auf eines dieser Gitter , das gegen die Behälterwand mittels eines Isolators 229 isoliert ist, ist schematisch in Figur 4b dargestellt.

Jeweils vier benachbarte Gitter bilden eine Gittergruppe, an die in bestimmter zeitlicher Reihenfolge ein Bezugspotential, beispielsweise Masse, ein positives Potential und/oder ein negatives Potential angelegt wird, wie nachfolgend anhand von Figur 4c erläutert wird.

Hierzu sind jeweils vier aufeinanderfolgende Gitter an unterschiedliche Schalter SW1, SW2, SW3, SW4 angeschlossen. In dem Beispiel sind die Gitter 29A, 29E, 29I an den ersten Schalter SW1 und die zwischen diesen Gittern 29A, 29E, 29I liegenden Gitter 29B, 29F, 29K an den zweiten Schalter SW2, die Gitter 29C, 29G, 29L an den dritten Schalter SW3 und die Gitter 29D, 29H, 29M an den vierten Schalter SW4 angeschlossen. Jeder Schalter besitzt drei Schalterstellungen, um die Gitter wahlweise an ein negatives Potential V-, Bezugspotential GND oder an ein positives Potential V+ anzulegen.

Während des Betriebs werden die Schalter SW1-SW4 durch eine Steuerschaltung 400 beispielsweise so angesteuert, dass an unmittelbar benachbarten Gittern unterschiedliche Potentiale anliegen, wobei sich für in einer Richtung aufeinanderfolgende Gitter folgende Potentialabfolge ergibt: -V, GND, +V, GND, -V, GND... Diese räumliche Abfolge der Potentialverhältnisse entspricht auch der zeitlichen Abfolge der Potentiale an einem Gitter, wie die nachfolgende Tabelle veranschaulicht, die für fünf aufeinanderfolgende Schaltzyklen Z1-Z5 die Potentiale an fünf räumlich aufeinanderfolgenden, beliebig ausgewählten Gittern 29B-29F veranschaulicht.

**Tabelle 1: Zeitliche und räumliche Abfolge der Potentiale an den einzelnen Gitter bei einer Ausführungsform des Filterverfahrens**

| Gitter | Z1 | Z2 | Z3 | Z4 | Z5 |
|---|---|---|---|---|---|
| 29B | -V | GND | +V | GND | -V |
| 29C | GND | +V | GND | -V | GND |
| 29D | +V | GND | -V | GND | +V |
| 29E | GND | -V | GND | +V | GND |
| 29F | -V | GND | +V | GND | -V |

Wie ersichtlich ist, wiederholt sich die zeitliche Potentialabfolge nach jeweils vier Schaltzyklen, die räumliche Potentialabfolge wiederholt sich nach jeweils vier Gittern, so dass jeweils vier Gitter eine Einheit bilden. In dem Beispiel wir an die einzelnen Gitter stets abwechselnd ein positives oder negatives Potential und Bezugspotential angelegt.

Selbstverständlich kann die Steuerschaltung auch andere geeignete "Schaltmuster" erzeugen und beispielsweise die einzelnen Gitter abwechselnd mit einem positiven oder. Außerdem ist die Zeitdauer einstellbar, für die die einzelnen Potentiale an den Gittern anliegen.

Werden in er erläuterten Weise an jeweils benachbarte Gitter unterschiedliche Potentiale angelegt, so entsteht zwischen diesen Gittern ein elektrisches Feld, in dem feinste Feststoffteilchen oder Staubteilchen, die in der Sedimentationszone vorhanden sind, je nach deren elektrostatischer Aufladung zu einem der Gitter gezogen werden. Wird ein zuvor positiv oder negativ geladenes Gitter anschließend auf Bezugspotential GND gelegt, so können sich die Staubteilchen frei bewegen und werden von diesem Gitter zu dem benachbarten Gitter gezogen, das zuvor auf Bezugspotential lag und nun positiv oder negativ geladen ist. Auf diese Weise können die Staubteilchen zum Einen an den Gittern 29A-29M eingefangen und zu größeren Aggregaten verdichtet werden und zum Anderen in der Sedimentationszone S2 nach unten in Richtung des zweiten Auslasses 15 geleitet werden.

An die Gitter können mit Hilfe einer druckfesten, temperaturbeständigen und isolierten Zuführung Spannungen bis zu 30 000 Volt angelegt werden.

### Bezugszeichenliste

- 10: Wascheinheit
- 11: Einlass
- 12: Einlass
- 13: Waschlösungsauslass
- 14: Filter- und Sedimentationsanordnung
- 15: Auslass
- 16: Lösungsmitteleinlass
- 18: Kühlkristallisator
- 20: Extraktionseinheit
- 21: Einlass
- 22: Einlass
- 23: Extraktauslass
- 24: Filter- und Sedimentationsanordnung
- 25: Auslass
- 26: Extraktionsmitteleinlass
- 27: Extraktionsmitteleinlass
- 28: Kühlkristallisator
- 29A-29F: Gitter des Staubfilters
- 100, 200: Behälter
- 101, 201: oberes Ende
- 102, 202: unteres Ende
- 110, 210: Filter

- 111, 211: Filterhalterung
- 112, 212: Flansche
- 121 - 126: Öffnungen für Anschlüsse
- 131, 231: Gegenstromzone
- 132, 232: Ausleitungszone
- 133, 233: Beruhigungszone
- 221 - 226: Öffnungen für Anschlüsse
- 400: Steuerschaltung
- B1-B3, B5: Behälter
- B4, B6: Trocknungsvorrichtung
- F1, F2: Filter
- TV1-TV3: Fest-Flüssig-Trennvorrichtung

- P1-P8: Pumpe
- P51, P52: Förderrohre
- S1, S2: Sedimentationseinheit, Sedimentationskolonne
- Ü1, Ü2: Überdruckventil
- R1-R2: Reduzierventil
- H1-H3: Heizung
- E: Extraktionsrohr
- W: Waschrohr
- DS: Destillationsanlage
- N2: Inertgasversorgung

## Patentansprüche

1. Vorrichtung (20; 10) zur kontinuierlichen Extraktion von Extrakten aus festen Stoffen, zum Waschen von festen Stoffen oder zum Umkristallisieren von festen Stoffen, die folgende Merkmale aufweist:
eine Filter- und Sedimentationsanordnung (24; 14) mit
- einem langgestreckten Behälter (200; 100) mit einem ersten Einlass (22; 12), der beabstandet zu einem oberen Ende und einem unteren Ende im Bereich einer Sedimentationszone (S2; S1) in das Behälterinnere mündet
- wenigstens einem zweiten Einlass (26, 27; 16), der beabstandet zu dem unteren Ende angeordnet ist,
- einem oberhalb der Sedimentationszone (S2; S1) angeordneten ersten Auslass (23; 13) und einen im Bereich der oder unterhalb der Sedimentationszone (S2; S1) angeordneten zweiten Auslass (25; 15)
ein Rohr zum Extrahieren der festen Stoffe (E), zum Waschen der festen Stoffe (W) oder zum Lösen der festen Stoffe mit einem Einlass sowie einem Auslass, das an dem ersten Einlass (22; 12) der Filter- und Sedimentationsanordnung (24; 14) in den Behälter (200; 100) hineinragt und das eine im Inneren des Rohres angeordnete Verwirbelungsvorrichtung aufweist.

2. Vorrichtung nach Anspruch 1, bei der die Filter- und Sedimentationsanordnung (24; 14), eine oberhalb der Sedimentationszone (S2; S1) angeordnete Filtereinheit (F2; F1) mit einem Filter (210; 110) aufweist, wobei der Filter (210; 110) zwischen der Sedimentationszone (S2; S1) und dem ersten Auslass (23; 13) angeordnet ist.

3. Vorrichtung nach Anspruch 1 oder 2, bei der die Filter- und Sedimentationsanordnung ein Staubfilter mit folgenden Merkmalen umfasst:
- wenigstens zwei in der Sedimentationszone (S2; S1) in Längsrichtung des Behälters (200; 100) beabstandet zueinander angeordnete elektrisch leitende Gitter, (29A - 29M),
- wobei an diese Gitter wenigstens eines der folgenden Potentiale an und abschaltbar oder wechselweise anlegbar ist: ein Bezugspotential (GND), ein positives Potential (U+) und/oder ein negatives Potential (U-).

4. Vorrichtung nach einem der vorangehenden Ansprüche, bei der das Rohr (E; W) waagrecht angeordnet und mit einer drehbaren Verwirbelungsvorrichtung (S) versehen ist.

5. Vorrichtung nach einem der vorangehenden Ansprüche, bei der das Rohr (E; W) eine Heizvorrichtung (H1; H2) aufweist.

6. Vorrichtung nach einem der vorangehenden Ansprüche, bei der die Filter- und Sedimentationsanordnung (24; 14) zwei zweite Einlässe (26, 27; 16, 17) aufweist, die in Längsrichtung der langgestreckten Sedimentationszone (S2; S1) beabstandet zueinander angeordnet sind.

7. Vorrichtung nach einem der vorangehenden Ansprüche, bei der an den wenigstens einen zweiten Einlass (26, 27) der ersten Filter- und Sedimentationsanordnung (24) eine Fördereinrichtung angeschlossen ist, die wenigstens eine Pumpe (P5) umfasst.

8. Vorrichtung nach Anspruch 6 und 7 bei der die Fördereinrichtung ein beheiztes Förderrohr (P52; H3), das an einen der zweiten Einlässe (27) der Filter- und Sedimentationsanordnung (24) angeschlossen ist, und ein unbeheiztes Förderrohr (P51), das an den anderen der zweiten Einlässe (26) angeschlossen ist, aufweist, wobei der eine zweite Einlass (27) näher als der andere zweite Einlass (26) an dem ersten Einlass (22) der Filter- und Sedimentationsanordnung angeordnet ist.

9. Vorrichtung nach einem der vorangehenden Ansprüche, bei der dem ersten Auslass (23; 13) der Filter- und Sedimentationsanordnung (24; 14) eine Kühlkristallisationsvorrichtung (28; 18) und eine Trennvorrichtung (TV2; TV1) zur Trennung von Extrakt und Extraktionsmittel nachgeordnet sind.

10. Verfahren zur kontinuierlichen Extraktion von Extrakten aus festen Stoffen, das folgende Verfahrensschritte umfasst:
- Bereitstellen einer Vorrichtung (24; 14) nach einem der Ansprüche 1 bis 9,
- Zuführen eines Feststoff-Extraktionsmittel-Gemisches an den ersten Einlass (22; 12) und Zuführen eines Extraktionsmittels an den wenigstens einen zweiten Einlass (26, 27; 17), der Filter- und Sedimentationsanordnung (24; 14) wobei die Fließgeschwindigkeiten des Feststoff-Extraktionsmittel-Gemisches an dem ersten Eingang (22; 12) und des Extraktionsmittels an dem wenigstens einen zweiten Einlass (26, 27; 17) so aufeinander abgestimmt sind, dass über das Feststoff-Extraktionsmittel-Gemisch zugeführte extrahierte Feststoffteile gegen die Schwerkraft in der Sedimentationszone (S2; S1) absinken und über den zweiten Auslass (25; 15) abgeführt werden.

11. Verfahren nach Anspruch 10, bei dem die Fließgeschwindigkeiten des Feststoff-Extraktionsmittel-Gemisches an dem ersten Eingang (12; 22) und des Extraktionsmittels an dem zweiten Eingang (26, 27; 17) so aufeinander abgestimmt sind, dass der Extraktionsmittelstrom in der Sedimentationszone (S2; S1), gegen den die extrahierten Feststoffteile absinken weniger als 0,05 cm/sec, vorzugsweise weniger als 0,01 cm/sec beträgt.

12. Verfahren nach Anspruch 10 oder 11, bei dem aus den Feststoffen des Feststoff-Extraktionsmittel-Gemisches vor der Zuführung zu der Filter- und Sedimentationsanordnung (24; 14) in dem Rohrunter erhöhtem Druck und erhöhter Temperatur Extrakte extrahiert und in dem Extraktionsmittel gelöst werden.

13. Verfahren zum kontinuierlichen Waschen von Feststoffen, das folgende Verfahrensschritte umfasst:
- Bereitstellen einer Vorrichtung (14) nach einem der Ansprüche 1 bis 9,
- Zuführen eines Feststoff-Waschmittel-Gemisches an den ersten Einlass (12) und Zuführen eines Waschmittels an den wenigstens einen zweiten Einlass (16) der Filter- und Sedimentationsanordnung (14), wobei die Fließgeschwindigkeiten des Feststoff-Waschmittel-Gemisches an dem ersten Eingang (12) und des Waschmittels an dem zweiten Eingang (16) so aufeinander abgestimmt sind, dass über das Feststoff-Waschmittel-Gemisch zugeführte gewaschene Feststoffe gegen die Schwerkraft in der Sedimentationszone (S1) absinken und über den zweiten Auslass (15) abgeführt werden.

14. Verfahren nach Anspruch 13, bei dem die Fließgeschwindigkeiten des Feststoff-Waschmittel-Gemisches an dem ersten Eingang (12) und des Waschmittels an dem zweiten Eingang (16) so aufeinander abgestimmt sind, dass der Waschmittelstrom in der Sedimentationszone (S1), gegen den die gewaschenen Feststoffteile absinken weniger als 0,05 cm/sec, vorzugsweise weniger als 0,01 cm/sec beträgt.

15. Verfahren nach Anspruch 13 oder 14, bei dem aus den Feststoffen oder von den Feststoffen des Feststoff-Waschmittel-Gemisches vor der Zuführung zu der Filter- und Sedimentationsanordnung (14) Verunreinigungen in dem Rohr in dem unter erhöhtem Druck und erhöhter Temperatur gelöst werden.

16. Verfahren zum kontinuierlichen Umkristallisieren von Feststoffen, das folgende Verfahrensschritte umfasst:
- Bereitstellen einer Vorrichtung nach einem der Ansprüche 1 bis 9;
- Zuführen eines Feststoff-Lösungsmittels-Gemisches mit einem in dem Lösungsmittel gelösten Feststoff an den ersten Einlass (22; 12) und Zuführen eines Lösungsmittels an den wenigstens einen zweiten Einlass (26, 27; 16), wobei die Fließgeschwindigkeiten des Feststoff-Lösungsmittel-Gemisches an dem ersten Eingang (22; 12) und des Lösungsmittels an dem zweiten Einlass (26, 27; 16) so aufeinander abgestimmt sind, dass über das Feststoff-Lösungsmittel-Gemisch zugeführte Verunreinigungen gegen die Schwerkraft in der Sedimentationszone (S2; S1) absinken und über den zweiten Auslass (25; 15) abgeführt werden und dass den gelösten Feststoff enthaltendes Lösungsmittel über den ersten Auslass (23; 13) abgeführt wird;
- Rekristallisieren des in dem über den ersten Auslass (23; 13) abgeführten Lösungsmittel enthaltenen gelösten Feststoffes.

17. Verfahren nach Anspruch 16, bei dem der Feststoff in dem Rohr (E; W) in dem Lösungsmittel unter erhöhter Temperatur und/oder erhöhtem Druck gelöst wird.

18. Verfahren nach Anspruch 16 oder 17, bei dem die Fließgeschwindigkeiten der Lösung an dem ersten Eingang (22; 12) und des Lösungsmittels an dem zweiten Eingang (27, 26; 16) so aufeinander abgestimmt sind, dass der Lösungsmittelstrom in der Sedimentationszone (S2; S1), gegen den die festen Verunreinigungen absinken weniger als 0,05 cm/sec, vorzugsweise weniger als 0,01 cm/sec beträgt.

19. Vorrichtung zur kontinuierlichen Extraktion von Extrakten aus festen Stoffen, die folgende Merkmale aufweist:
- eine erste Vorrichtung (10) nach einem der Ansprüche 1 bis 9, und
- eine der ersten Vorrichtung (10) nachgeordnete zweite Vorrichtung (20) nach einem der Ansprüche 1 bis 9,
- eine zwischen der ersten und zweiten Vorrichtung (10, 20) angeordnete erste Fördereinrichtung mit wenigstens einer Pumpe (P4).

20. Vorrichtung nach Anspruch 19, die weiterhin einen Behälter (B2), dem Feststoff und ein Waschmittel oder Extraktionsmittel zuführbar sind, aufweist, wobei die erste Vorrichtung (10) dem Behälter (B2) nachgeordnet ist und wobei eine zweite Fördereinrichtung (P2) zwischen dem Behälter (B2) und der Wascheinheit oder zweiten Extraktionsvorrichtung (10) angeordnet ist, die wenigstens eine Pumpe (P2) umfasst.

21. Vorrichtung nach Anspruch 19 oder 20, bei der an den zweiten Auslass (25) der Filter- und Sedimentationsanordnung (24) der zweiten Vorrichtung eine weitere Fördereinrichtung mit wenigstens einer Pumpe (P6) angeschlossen ist.

22. Vorrichtung nach einem der Ansprüche 20 bis 21, bei der an den zweiten Einlass (16) der Filter- und Sedimentationsanordnung (S1) der ersten Vorrichtung eine Fördereinrichtung mit wenigstens einer Pumpe (P3) zur Zuführung eines Wasch- oder Extraktionsmittels angeschlossen ist.

## Claims

1. Device (20; 10) for continuously extracting extracts from solid materials, for washing solid materials or for recrystallising solid materials, which has the following features:
a filtering and sedimentation device (24; 14) with
- an elongated container (200; 100) with a first inlet (22; 12) which opens out at a distance from an upper end and a lower end, in the area of a sedimentation zone (S2; S1), into the interior of the container
- at least one second inlet (26, 27; 16) that is arranged at a distance from the lower end,
- a first outlet (23; 13) arranged above the sedimentation zone (S2; S1) and a second outlet (25; 15) arranged in the area of or below the sedimentation zone (S2; S1)
a pipe for extracting the solid materials (E), for washing the solid materials (W) or for dissolving the solid materials, with an inlet as well as an outlet, and projecting into the container (200; 100), at the first inlet (22; 12) of the filtering and sedimentation device (24; 14), and having a turbulence device arranged in the interior of the pipe.

2. Device according to claim 1 in which, arranged above the sedimentation zone (S2; S1), the filtering and sedimentation device (24; 14) has a filter unit (F2; F1) with a filter (210; 110), wherein the filter (210; 110) is arranged between the sedimentation zone (S2; S1) and the first outlet (23; 13).

3. Device according to claim 1 or 2, in which the filtering and sedimentation device comprises a dust filter with the following features:
- at least two electrically conductive grids (29A - 29M) arranged in the sedimentation zone (S2; S1), spaced apart from one another in the longitudinal direction of the container (200; 100),
- wherein at these grids, at least one of the following potentials can be switched on and off, or applied alternately: a reference potential (GND), a positive potential (U+) and/or a negative potential (U-).

4. Device according to one of the preceding claims, in which the pipe (E; W) is arranged horizontally and is equipped with a turbulence device (S) that can be rotated.

5. Device according to one of the preceding claims, in which the pipe (E; W) has a heating device (H1; H2).

6. Device according to one of the preceding claims, in which the filtering and sedimentation device (24; 14) has two inlets (26, 27; 16, 17) that are arranged spaced apart from one another in the longitudinal direction of the elongated sedimentation zone (S2; S1).

7. Device according to one of the preceding claims, in which a transportation device which comprises at least one pump (P5) is connected to the at least one second inlet (26, 27) of the first filtering and sedimentation device (24).

8. Device according to claim 6 and 7, in which the transportation device has a heated transportation pipe (P52; H3) that is connected to one of the two inlets (27) of the filtering and sedimentation device (24), and an unheated transportation pipe (P51) that is connected to the other second inlet (26), wherein the one second inlet (27) is arranged closer than the other second inlet (26) to the first inlet (22) of the filtering and sedimentation device.

9. Device according to one of the preceding claims, in which a cooling crystallisation device (28; 18) and a separation device (TV2; TV1) for separating extract and extraction agents are arranged downstream of the first outlet (23; 13) of the filtering and sedimentation device (24; 14).

10. Method for continuously extracting extracts from solid materials, which comprises the following process steps:
- provision of a device (24; 14) according to one of the claims 1 to 9,
- supplying a solid material/extraction agent mix to the first inlet (22; 12) and supplying an extraction agent to the at least one second inlet (26, 27; 17) of the filtering and sedimentation device (24; 14), wherein the flow rates of the solid material/extraction agent mix at the first inlet (22; 12) and of the extraction agent at the at least one second inlet (26, 27; 17) are adapted to one another in such a way that extracted solid particles that are supplied via the solid material/extraction agent mix sink against gravity in the sedimentation zone (S2; S1) and are led off via the second outlet (25; 15).

11. Method according to claim 10, in which the flow rates of the solid material/extraction agent mix at the first inlet (12; 22) and of the extraction agent at the second inlet (26, 27; 17) are adapted to one another in such a way that the extraction agent flow in the sedimentation zone (S2; S1), against which the extracted solid particles sink, is less than 0.05 cm/second, preferably less than 0.01 cm/second.

12. Method according to claim 10 or 11, in which before being supplied to the filtering and sedimentation device (24; 14), out of the solid materials of the solid material/extraction agent mix, extracts are extracted and are dissolved in the extraction agent, in the pipe, under increased pressure and increased temperature.

13. Method for continuous washing of solid materials, which comprises the following process steps:
- provision of a device (14) according to one of the claims 1 to 9,
- supplying a solid material/detergent mix to the first inlet (12) and supplying a detergent to the at least one second inlet (16) of the filtering and sedimentation device (14), wherein the flow rates of the solid material/detergent mix at the first inlet (12) and of the detergent at the second inlet (16) are adapted to one another in such a way that washed solid materials supplied via the solid material/detergent mix sink against gravity in the sedimentation zone (S1) and are led off via the second outlet (15).

14. Method according to claim 13, in which the flow rates of the solid material/detergent mix at the first inlet (12) and of the detergent at the second inlet (16) are adapted to one another in such a way that the detergent flow in the sedimentation zone (S1), against which the washed solid particles sink, is less than 0.05 cm/second, preferably less than 0.01 cm/second.

15. Method according to claim 13 or 14, in which before being supplied to the filtering and sedimentation device (14), out of the solid materials or from the solid materials of the solid material/detergent mix, impurities are dissolved, in the pipe, under increased pressure and increased temperature.

16. Method for continuous recrystallisation of solid materials, which comprises the following process steps:
- provision of a device according to one of the claims 1 to 9;
- supplying a solid material/solvent mix, with a solid material dissolved in the solvent, to the first inlet (22; 12) and supplying a solvent to the at least one second inlet (26, 27; 16), wherein the flow rates of the solid material/solvent mix at the first inlet (22; 12) and of the solvent at the second inlet (26, 27; 16) are adapted to one another in such a way that impurities supplied via the solid material/solvent mix sink against gravity in the sedimentation zone (S2; S1) and are led off via the second outlet (25; 15), and that the solvent containing the dissolved solid material is led off via the first outlet (23; 13);
- recrystallisation of the dissolved solid material that is contained in the solvent led off via the first outlet (23; 13).

17. Method according to claim 16, in which the solid material is dissolved in the pipe (E; W), in the solvent, under increased temperature and/or increased pressure.

18. Method according to claim 16 or 17, in which the flow rates of the solution at the first inlet (22; 12) and of the solvent at the second inlet (27, 26; 16) are adapted to one another in such a way that the solvent flow in the sedimentation zone (S2; S1), against which the solid impurities sink, is less than 0.05 cm/second, preferably less than 0.01 cm/second.

19. Device for the continuous extraction of extracts from solid materials, which has the following features:
- a first device (10) according to one of the claims 1 to 9, and
- a second device (20) according to one of the claims 1 to 9, arranged downstream of the first device (10),
- a first transportation device arranged between the first and second devices (10, 20), with at least one pump (P4).

20. Device according to claim 19, which furthermore has a container (B2) to which solid material and a detergent or extraction agent can be supplied, wherein the first device (10) is arranged downstream of the container (B2) and wherein arranged between the container (B2) and the washing unit or the second extraction device (10) is a second transportation device (P2), which comprises at least one pump (P2).

21. Device according to claim 19 or 20, in which connected to the second outlet (25) of the filtering and sedimentation device (24) of the second device is a further transportation device with at least one pump (P6).

22. Device according to one of the claims 20 to 21, in which connected to the second inlet (16) of the filtering and sedimentation device (S1) of the first device is a transportation device with at least one pump (P3) for supplying a detergent or extraction agent.

## Revendications

1. Dispositif (20 ; 10) permettant d'extraire de manière continue des extraits de matières solides, de laver des matières solides ou de recristalliser des matières solides, qui présente les caractéristiques suivantes :
un dispositif de sédimentation et de filtrage (24 ; 14) comportant :
- un récipient très allongé (200 ; 100) comportant une première entrée (22 ; 12), qui débouche à l'intérieur du récipient à distance d'une extrémité supérieure et d'une extrémité inférieure au niveau d'une zone de sédimentation (S2 ; S1)
- au moins une seconde entrée (26, 27 ; 16) écartée de l'extrémité inférieure,
- une première sortie (23 ; 13) au-dessus de la zone de sédimentation (S2 ; S1) et une seconde sortie (25 ; 15) au niveau de ou au-dessous de la zone de sédimentation (S2 ; S1), et
- un tuyau permettant d'extraire les matières solides (E), de laver les matières solides (W) ou de dissoudre les matières solides comportant une entrée ainsi qu'une sortie, qui dépasse à l'intérieur du récipient (200 ; 100) sur la première entrée (22 ; 12) du dispositif de sédimentation et de filtrage (24 ; 14) et présente un dispositif de tourbillonnement agencé à l'intérieur du tuyau.

2. Dispositif selon la revendication 1, dans lequel le dispositif de filtrage et de sédimentation (24 ; 14) présente une unité de filtrage (F2 ; F1) comportant un filtre (210 ; 110) au-dessus d'une zone de sédimentation (S2 ; S1), le filtre (210 ; 110) étant installé entre la zone de sédimentation (S2 ; Si) et la première sortie (23 ; 13).

3. Dispositif selon la revendication 1 ou 2, dans lequel le dispositif de filtrage et de sédimentation comprend un filtre antipoussières comportant les caractéristiques suivantes :
- au moins deux grilles électroconductrices (29A - 29M) écartées l'une de l'autre dans la zone de sédimentation (S2 ; S1) dans le sens de la longueur du récipient (200 ; 100), et
- on peut exciter et désexciter ou appliquer alternativement sur cette grille au moins l'un des potentiels suivants : un potentiel de référence (GND), un potentiel positif (U+) et/ou un potentiel négatif (U-).

4. Dispositif selon l'une quelconque des revendications précédentes, dans lequel le tuyau (E ; W) est horizontal et muni d'un dispositif de tourbillonnement rotatif (S).

5. Dispositif selon l'une quelconque des revendications précédentes, dans lequel le tuyau (E ; W) présente un dispositif de chauffage (H1 ; H2).

6. Dispositif selon l'une quelconque des revendications précédentes, dans lequel le dispositif de sédimentation et de filtrage (24 ; 14) présente deux secondes entrées (26, 27 ; 16, 17) écartées l'une de l'autre dans le sens de la longueur de la zone de sédimentation très allongée (S2 ; S1).

7. Dispositif selon l'une quelconque des revendications précédentes, dans lequel une installation d'alimentation qui comprend une pompe (P5) est raccordée à au moins une seconde entrée (26, 27) du dispositif de filtrage et de sédimentation (24).

8. Dispositif selon la revendication 6 et 7 dans lequel l'installation d'alimentation présente un tuyau d'alimentation chauffé (P52 ; H3) raccordé à une seconde entrée (27) du dispositif de sédimentation et de filtrage (24), et un tuyau d'alimentation non chauffé (P51) raccordé à l'autre des secondes entrées (26), une seconde entrée (27) étant plus près que l'autre seconde entrée (26) sur la première entrée (22) du dispositif de sédimentation et de filtrage.

9. Dispositif selon l'une quelconque des revendications précédentes, dans lequel un dispositif de cristallisation à froid (23 ; 13) et un dispositif séparateur (TV2 ; TV1) sont disposés à la suite de la première sortie (28 ; 18) permettant de séparer l'extrait et le milieu d'extraction.

10. Procédé permettant d'extraire de manière continue des extraits de matières solides qui comprend les étapes suivantes :
- mise à disposition d'un dispositif (24 ; 14) selon l'une quelconque des revendications 1 à 9,
- acheminement d'un mélange de matières solides/milieu d'extraction à première entrée (22 ; 12) et acheminement d'un milieu d'extraction à au moins une seconde entrée (26, 27 ; 17), du dispositif de sédimentation et de filtrage (24 ; 14), les vitesses d'écoulement du mélange de matières solides et du milieu d'extraction à la première entrée (22 ; 12) et du milieu d'extraction à au moins une seconde entrée (26, 27 ; 17) étant adaptées de sorte que les parties de matières solides à extraire acheminées par le mélange de matières solides/milieu d'extraction descendent dans la zone de sédimentation (S2 ; S1) par rapport à la force de gravité et sont évacuées par la seconde sortie (25 ; 15).

11. Procédé selon la revendication 1, dans lequel les vitesses d'écoulement du mélange de matières solides/mileu d'extraction à la première entrée (12 ; 22) et du milieu d'extraction à la seconde entrée (26, 27 ; 17) sont adaptées l'une à l'autre de sorte que le flux du milieu d'extraction dans la zone de sédimentation (S2 ; S1), contre lequel les éléments de matières solides extraits descendent, est de 0,05 cm/sec, de préférence de moins de 0,01 cm/sec.

12. Procédé selon la revendication 10 ou 11, dans lequel des extraits provenant des matières solides du mélange de matières solides/mileu d'extraction sont extraits dans le tuyau sous une pression et une température élevées avant l'acheminement au dispositif de sédimentation et de filtrage (24 ; 14) et sont dissous dans le milieu d'extraction.

13. Procédé permettant de laver de manière continue des matières solides qui comprend les étapes suivantes :
- mise à disposition d'un dispositif (14) selon l'une quelconque des revendications 1 à 9
- acheminement d'un mélange de matières solides/détergent à la première entrée (12) et acheminement d'un détergent à au moins une seconde entrée (16) du dispositif de sédimentation et de filtrage (14), les vitesses d'écoulement du mélange de matières solides/détergent à la première entrée (12) et du détergent à la seconde entrée (16) étant adaptées à l'une de sorte que les matières solides lavées acheminées par le mélange de matières solides/détergent descendent dans la zone de sédimentation (S1) par la force de gravité et sont évacuées par la seconde sortie (15).

14. Procédé selon la revendication 14, dans lequel les vitesses d'écoulement du mélange de matières solides/détergent à la première entrée (12) et du détergent à la seconde entrée (16) sont adaptées l'une à l'autre de sorte que le flux du détergent dans la zone de sédimentation (S1), contre lequel les parties solides lavées descendent, est de 0,05 cm/sec, de préférence inférieur à 0,01 cm/sec.

15. Procédé selon la revendication 13 ou 14, dans lequel des impuretés provenant des matières solides ou du mélange de matières solides/détergent sont dissoutes dans le tuyau sous une pression et une température élevées avant l'acheminement au dispositif de sédimentation et de filtrage (14).

16. Procédé permettant de recristalliser de manière continue des matières solides qui comprend les étapes suivantes :
- mise à disposition d'un dispositif selon l'une quelconque des revendications 1 à 9
- acheminement d'un mélange de matières solides/ solvant comportant une matière solide dissoute dans le solvant à la première entrée (22 ; 12) et acheminement d'un solvant à au moins une seconde entrée (26, 27 ; 16), les vitesses d'écoulement du mélange de matières solides/solvant à la première entrée (22; 12) et du solvant à la seconde entrée (26, 27 ; 16) étant adaptées l'une à l'autre de sorte que les impuretés acheminées par le mélange de matières solides/solvant descendent dans la zone de sédimentation (S2 ; S1) par la force de gravité et sont évacuées par la seconde sortie (25 ; 15) et que le solvant contenant la matière solide dissoute est évacué par la première sortie (23 ; 13) ;
- recristallisation de la matière solide dissoute contenue dans le solvant évacué par la première sortie (23 ; 13).

17. Procédé selon la revendication 16, dans lequel la matière solide (E ; W) est dissoute dans le tuyau dans le solvant sous une température élevée et/ou une pression élevée.

18. Procédé selon la revendication 16 ou 17, dans lequel les vitesses d'écoulement de la solution à la première entrée (22 ; 12) et du solvant à la seconde entrée (27, 26 ; 16) sont adaptées l'une à l'autre de sorte que le flux de solvant dans la zone de sédimentation (S2 ; S1) contre lequel les impuretés solides descendent, est de 0,05 cm/ sec, de préférence inférieur à 0,01 cm/ sec.

19. Dispositif permettant d'extraire de manière continue des extraits de matières solides qui présente les caractéristiques suivantes :
- un premier dispositif (10) selon l'une quelconque des revendications 1 à 9, et
- un second dispositif (20) à la suite du premier dispositif (10) selon l'une quelconque des revendications 1 à 9,
- une première installation d'alimentation entre le premier et le second dispositif (10, 20) comportant au moins une pompe (P4).

20. Dispositif selon la revendication 19 qui présente en outre un récipient (B2), vers lequel la matière solide et un détergent ou un milieu d'extraction peuvent être acheminés, le premier dispositif (10) étant disposé à la suite du récipient (B2), avec une seconde installation d'alimentation (P2) qui, entre le récipient (B2) et l'unité de lavage ou le second dispositif d'extraction (10), comprend au moins une pompe (P2).

21. Dispositif selon la revendication 19 ou 20, dans lequel une autre installation d'alimentation comportant au moins une pompe (P6) est raccordée à la seconde sortie (25) du dispositif de sédimentation et de filtrage (24) du second dispositif.

22. Dispositif selon l'une quelconque des revendications 20 à 21, dans lequel une installation d'alimentation comportant au moins une pompe (P3) est raccordée à la seconde entrée (16) du dispositif de sédimentation et de filtrage (S1) du premier dispositif, pour l'acheminement d'un produit de lavage ou d'un milieu d'extraction.
